# EUROPÄISCHE PATENTSCHRIFT

(11) **EP 0 652 171 B1**
(45) Veröffentlichungstag und Bekanntmachung des Hinweises auf die Patenterteilung: **12.11.1997**
(21) Anmeldenummer: 94114486.7
(22) Anmeldetag: 15.09.1994
(51) Int. Cl.: B65G 65/00, B65H 31/30, B65H 33/18, B31B 1/98

(54) **Verfahren und Einrichtung zum Palettieren von Schlauchabschnitten aus Papier oder dgl.**
Method of and device for palletizing tubular sections made of paper or the like
Procédé et dispositif pour palettiser des sections tubulaires en papier ou similaires

(30) Priorität: 05.10.1993 DE 4333906; 09.12.1993 DE 9318897 U
(43) Veröffentlichungstag der Anmeldung: 10.05.1995
(73) Patentinhaber: SEEMI Société d'Etudes d'Equipements de Modernisation Industrielle, F-16400 La Couronne (FR)
(72) Erfinder: Kuckhermann, Gustav, D-49525 Lengerich (DE); Corteccia, Robert, F-16440 Roullet (FR)
(74) Vertreter: Busse & Busse Patentanwälte

(56) Entgegenhaltungen:
- EP-A- 0 146 869
- EP-A- 0 477 763
- DE-C- 3 444 093
- DE-U- 8 812 067
- DE-U- 9 211 262
- US-A- 3 907 274

## Beschreibung

Die Erfindung bezieht sich auf ein Verfahren und eine Einrichtung zum Palettieren und Depalettieren von Schlauchabschnitten aus Papier.

Bei bekannten Verfahren und Einrichtungen (DE 34 44 093 C2) zum Palettieren und Depalettieren von durch eine Längsklebenaht zur Schlauchform geschlossenen Schlauchabschnitten aus Papier oder dgl. Materialien zur Herstellung von Säcken oder Beutein werden die Schlauchabschnitte in Form von Schlauchpaketen von der Schlauchmaschine mittels der Ladevorrichtung der Palettiereinrichtung zugeführt, danach die Schlauchpakete auf den jeweiligen Auflageböden der Etagen-Palette über ein Förderband positioniert und nach der Belegung der Auflageböden wird die Etagen-Palette aus der Palettiereinrichtung entnommen, wobei die einzelnen Lagen der Schlauchpakete durch ihr Eigengewicht mit nach unten hin zunehmendem Druck flächig zusammengepreßt werden. Da die Längs- und/oder Querklebungen der Schlauchabschnitte noch frisch sind, können diese insbesondere im unteren Bereich so stark gepreßt werden, daß der Kleber das Papier durchdringt, die einzelnen Schlauchabschnitte während dem Verbleib in der Speicherstellung miteinander verkleben und damit bei der Weiterverarbeitung der Schlauchpakete nachteilige Störungen des Produktionsablaufs verbunden sind.

Bei einer weiteren Lösung gemäß DE-U-88 12 067.8, die den gattungsbildenden Stand der Technik darstellt, wird in der Praxis die mit festen Etagen versehene Palettiereinrichtung über einen Teleskop-Transportriemen beschickt. Bei dieser bekannten Lösung wird zwar durch die Verwendung ortsfester Auflageböden eine Zunahme der Flächenpressung mit zunehmendem Eigengewicht gestapelter Schlauchpakete vermieden, jedoch können sich aufgrund der Beschleunigung und Verzögerung jedes Paketes die Schlauchabschnitte gegeneinander verschieben, so daß das Schlauchpaket nicht mehr kantengerade abgelegt wird. Die dem jeweiligen Auflageboden zugeordneten Preßplatten sind nur über eine gemeinsam betriebene Preßplattenabsenkung in der Preßposition auf dem jeweiligen Schlauchpaket positionierbar, so daß die Pressung erst nach vollständiger Füllung aller Auflageböden der Etagen-Palette möglich ist.

Bei einer Lösung gemäß DE-U-92 11 262.5 sind die Auflageböden ebenfalls erst dann absenkbar, wenn die gesamte Palette gefüllt ist. Außerdem erfordert die an dieser Einrichtung vorgesehene Scherenmechanik eine weitgehend gleichmäßige Dicke der jeweiligen auf den Auflageböden befindlichen Schlauchpakete, so daß die Einrichtung in automatischen Produktionslinien wenig flexibel einsetzbar ist.

Eine die Zunahme der Flächenpressung mit zunehmendem Eigengewicht von gestapelten Paketen vermeidende Vorrichtung ist auch gemäß EP-A-0 146 869 bekannt. Es handelt sich jedoch hierbei um eine Vorrichtung für eine Papierschneidemaschine, bei der die Stapel geschnittener Bögen durch Luftbretter mit in ihrer Höhe entsprechend bemessenen Stützen an einer sich durch das Eigengewicht mehrerer Stapel verstärkenden Zusammenpressung gehindert sind.

Die Erfindung befaßt sich mit dem Problem, ein Verfahren und eine Einrichtung der eingangs angegebenen Art zu schaffen, womit bei geringem technischem Aufwand sowohl eine lagestabile und schnelle Handhabung der Schlauchpakete möglich als auch eine weitgehend verzögerungsfreie Pressung der Schlauchpakete erreichbar ist.

Die Erfindung löst dieses Problem mit einem Verfahren und einer Einrichtung, wie sie in den beigefügten Ansprüchen gekennzeichnet sind.

Mit dem erfindungsgemäßen Verfahren wird das jeweilige Schlauchpaket bei der Durchführung des Palettiervorgangs über eine Hubbewegung so positioniert, daß die gestapelten Schlauchabschnitte des Schlauchpakets lagestabil und weitgehend ohne Verschiebungen innerhalb des Stapels in den Bereich des jeweiligen Auflagebodens in der Palette verbringbar sind und über eine einfache Absenkbewegung so abgelegt werden können, daß eine exakte kantengerade Übereinanderlagerung aller Schlauchabschnitte eines Schlauchpakets, insbesondere während des gesamten Palettiervorgangs, gewährleistet ist. Nach dem Ablegen der Schlauchpakete auf dem Auflageboden wird erfindungsgemäß über eine Einzelpressung im Bereich dieses Auflagebodens, und vorteilhaft nach einer Einzelabsenkung und ohne Verzögerungen, die flächige Zusammenpressung der Schlauchpakete für eine speichergerechte Weiterbehandlung erreicht. Damit ermöglicht das Verfahren über eine steuerbare Etagenbeschickung mit geringem Aufwand eine flexible Anpassung an unterschiedliche Belegungsmuster der Schlauchpakete auf dem jeweiligen Auflageboden und auch bei unterschiedlichen Stapelhöhen als Folge kundenspezifisch unterschiedlicher Mengen von Schlauchabschnitten kann die Etagen-Palette ohne zusätzlichen Aufwand so belegt werden, daß eine weitgehend vollständige Ausnutzung von Stapelfläche und Stapelhöhe erreicht wird.

Außerdem wird dem Schlauchpaket in vorteilhafter Weiterbildung der Erfindung während der Handhabung gleichzeitig mit der Hubbewegung eine zangenartige Klemmung vermittelt, so daß die Schlauchpakete während des gesamten Palettiervorgangs, beginnend beim Einfahren in die Palettiereinrichtung bis zur Beendigung der Absenkbewegung, mit einer erhöhten Verfahrgeschwindigkeit bewegt werden können und so durch eine Steigerung der Beschickungsleistung die Produktivität und Flexibilität des Verfahrens zum Palettieren bzw. Depalettieren insgesamt erhöht werden kann.

Mit der erfindungsgemäßen Einrichtung zum Palettieren der Schlauchabschnitte gemäß Anspruch 5 wird das über eine Zuführvorrichtung auf einem Aufnahmeteil der Ladevorrichtung positionierte Schlauchpaket im Bereich des Führungswagens mit der senkrecht zur Aufnahmeebene bewegbaren Hubgabel so positioniert, daß bei der nachfolgenden Einfahrbewegung in die Palette auf das Schlauchpaket bzw. die Schlauchabschnitte keine deren Stapelposition verändernden Querkräfte wirksam sind. In vorteilhafter Weiterbildung wird dabei dem Schlauchpaket über während der Beschickung (bzw. Entnahme) zangenartig zusammenwirkende Bauteile eine zeitweilige Klemmung so vermittelt, daß die Einführbewegung der Hubgabel zwischen die jeweiligen Auflageböden der Etagen-Palette mit hoher Geschwindigkeit erfolgen kann. Die in der Speicherstellung befindlichen Schlauchpakete können danach erfindungsgemäß über eine mit geringer Verzögerung erfolgende Einzelabsenkung der Preßplatte zum jeweils belegten Auflageboden hin einer hinreichenden Pressung ausgesetzt werden, so daß bei der späteren Depalettierung fehlerfrei gestapelte Schlauchabschnitte von den Schlauchpaketen für eine Weiterbearbeitung entnehmbar sind.

Bei einer zweiten erfindungsgemäßen Einrichtung, wie sie in Anspruch 14 gekennzeichnet ist ist die Einrichtung im Bereich der Etagen-Palette mit jeweiligen Auflageböden versehen, die über höhenbeweglich geführte Trag- und Stützkonsolen so verbunden sind, daß die Preßplatte nach einer jeweiligen Einzelabsenkung der Auflageböden auf den Schlauchpaketen aufliegt. Die Trag- und Stützkonsolen bilden dabei überaus einfache Bauteile, so daß die Etagen-Palette mit geringem technischem Aufwand zu einer kundenspezifischen, an unterschiedliche Produktionsplanungen anpaßbare Baugröße mit beliebig vielen Auflageböden kombiniert werden kann. Dabei ermöglicht die Einzelabsenkung nach der Erfindung eine hohe Speicherkapazität und eine optimale Ausnutzung der verfügbaren Flurhöhe.

Bei einer dritten erfindungsgemäßen Einrichtung wie sie im Anspruch 19 gekennzeichnet ist, ist diese im Bereich der Etagen-Palette mit einer von den Auflageböden unabhängigen Haltevorrichtung für die Preßplatten versehen. Mit geringem Aufwand können dabei die jeweils an den Auflageböden ortsfest befindlichen Preßplatten in vorteilhafter Weise dadurch in Aufnahme- bzw. Preßstellung verbracht werden, daß eine Hebelmechanik die Preßplatte synchron mit der Bewegung der Ladevorrichtung anhebt bzw. absenkt. Diese individuell absenkbaren Preßplatten sind vorzusweise dann anwendbar, wenn ein häufiger, kundenspezifischer Wechsel der Schlauchform und eine häufig wechselnde Anzahl der jeweils übereinandner gestapelten Schlauchabschnitte eine flexible Produktionsanpassung erfordert.

In Weiterer vorteilhafter Weise kann die Einzelanhebung bzw. -absenkung der Preßplatte dadurch erreicht werden, daß die Haltevorrichtung jeweils die Preßplatten des zu füllenden Auflagebodens über Schwenkfinger anhebt und nach der Rückbewegung der Ladevorrichtung aus der Palette heraus mit der Haltevorrichtung die Preßplatte in die Preßstellung abgesenkt wird, so daß mit dieser Palettiereinrichtung ebenfalls die vorbeschriebenen Vorteile einer Einzelabsenkung der Preßplatte erreichbar sind.

Eine vierte erfindungsgemäße Einrichtung nach Anspruch 26 weist mit untereinander unverbundenen Auflageböden als Einzelbauteile zur Bildung der Etagen-Palette in Form eines senkrechten Turmes eine überaus einfache und flexibel handhabbare Konstruktion auf, die insbesondere in einem automatischen Produktionsdurchlauf die Anpassung an unterschiedliche Speicheraufgaben ermöglicht.

Die unverbundenen Auflageböden können dabei in einer raumsparenden Stapelstellung als ineinandergeschachtelte Bauteile transportiert und zur Benutzung innerhalb der Palettiereinrichtung mit geringem Aufwand bereitgestellt werden, wobei auch Schlauchpakete unterschiedlicher Höhen auf den jeweiligen Auflageböden positionierbar sind und beim Absenken des unmitttelbar nächstoberen, noch zu belegenden Auflagebodens eine schonende, durch das Gewicht der individuellen Preßplatten bestimmte Pressung der Schlauchpakete erreicht wird.

Die unverbundenen Auflageböden bilden in der Speicherstellung der Etagen-Palette einen senkrechten Turm beliebiger Höhe, so daß mit einer hohen Speicherkapazität eine optimale Ausnutzung der verfügbaren Flurhöhen auch an unterschiedlichen Produktionsstätten dadurch möglich ist, daß die beliebig variierbare Anzahl von Auflageböden in der unbelegten Stapelstellung ohne zusätzliche Hilfsmittel ausgewählt werden kann und die Auflageböden zur Belegung mit den Schlauchpaketen in die Palettiereinrichtung überführbar sind.

Die Einzelheiten der Erfindung sind in der nachfolgenden Beschreibung in Verbindung mit den Zeichnungen, die mehrere Ausführungsbeispiele einer Einrichtung zum Palettieren von Schlauchabschnitten erfindungsgemäßer Ausbildung veranschaulicht, näher erläutert. In der Zeichnung zeigen:
- Fig. 1: eine Seitenansicht einer erfindungsgemäßen Einrichtung zum Palettieren und Depalettieren von Schlauchpaketen mit einer im Bereich einer Ladevorrichtung befindlichen Etagen-Palette,
- Fig. 2: eine Draufsicht auf die Einrichtung zum Palettieren und Depalettieren gemäß einer Schnittlinie II-II in Fig. 1,
- Fig. 3: eine vergrößerte Ausschnittsdarstellung der Ladevorrichtung mit dem zugeführten Schlauchpaket gemäß einer Linie III-III in Fig. 2,
- Fig. 4: eine Ansicht der Ladevorrichtung ähnlich Fig. 3 mit dem Schlauchpaket in einer Hubstellung,
- Fig. 5: eine vergrößerte Ausschnittsdarstellung der Ladevorrichtung gemäß Fig. 1 mit einem im Bereich eines Führungswagens vorgesehenen Antrieb für eine Hubgabel,
- Fig. 6: eine Ansicht ähnlich Fig. 5 mit der Hubgabel in der Hubstellung gemäß Fig. 4,
- Fig. 7: eine vergrößerte Ausschnittsdarstellung eines im Übergangsspalt zwischen der Ladevorrichtung und der Etagen-Palette vorgesehenen Indexbolzens,
- Fig. 8: eine Ausschnittsdarstellung mit der in den Bereich des gemeinsamen Übergangsspalts zur Etagen-Palette verfahrenen Ladevorrichtung,
- Fig. 9: eine Seitenansicht der Ladevorrichtung mit dem in eine Ablageposition in die Etagen-Palette eingefahrenen Führungswagen,
- Fig. 10: eine vergrößerte Ausschnittsdarstellung des Einschubvorgangs des Schlauchpakets zwischen zwei Auflageböden der Etagen-Palette gemäß einer Linie X-X in Fig. 6
- Fig. 11: eine vergrößerte Vorderansicht auf die Etagen-Palette im unbefüllten Zustand nach dem Einfahren in die Palettiereinrichtung gemäß einer Linie XI-XI in Fig. 1,
- Fig. 12: eine Darstellung ähnlich Fig. 11 mit der im Bereich unterer Auflageböden gefüllten Palette,
- Fig. 13: eine Darstellung der Palette ähnlich Fig. 11 und Fig. 12 mit der Palette in einem Füllzustand mit abgesenkten Auflageböden zur Entnahme aus der Palettiereinrichtung,
- Fig. 14: eine vergrößerte Ausschnittsdarstellung jeweiliger Randbereiche der Auflageböden mit seitlichen Trag- und Stützkonsolen,
- Fig. 15 bis 17: jeweilige Ausschnittsdarstellungen der Auflageböden in unterschiedlichen Belegezuständen beim Auflegen des Schlauchpaketes und die Phasen einer Einzelabsenkung der jeweiligen Auflageböden,
- Fig. 18: eine teilweise geschnittene Seitenansicht der Palettiereinrichtung, die in einer zweiten Ausführungsform der Etagen-Palette mit jeweils einzeln bewegbaren Preßplatten im Bereich der Auflageböden versehen ist,
- Fig. 19: eine Seitenansicht der Palettiereinrichtung ähnlich Fig. 18, deren Etagen-Palette in einer dritten Ausführungsform eine Haltevorrichtung mit einzeln bewegbaren Preßplatten aufweist.
- Fig. 20: eine Seitenansicht der Palettiereinrichtung mit einer vierten Ausführungsform der Etagen-Palette mit einem die Preßplatten bewegenden äußeren Hubglied,
- Fig. 21: eine teilweise geschnittene Draufsicht auf die Palettiereinrichtung gemäß einer Linie XXI-XXI in Fig. 20,
- Fig. 22: eine teilweise geschnittene Vorderansicht auf die Palette gemäß einer Linie XXII-XXII in Fig. 20,
- Fig. 23: eine Seitenansicht der Palettiereinrichtung in einer Weiterbildung ähnlich Fig. 20, mit einer im Bereich der Ladevorrichtung befindlichen Etagen-Palette aus unverbundenen Auflageböden,
- Fig. 24: eine Seitenansicht der Etagen-Palette gemäß einer Linie II-II in Fig. 23,
- Fig. 25: eine vergrößerte Ausschnittsdarstellung im Bereich einer einen Auflageboden gemäß Fig. 23 untergreifenden Hubvorrichtung,
- Fig. 26: eine vergrößerte Ausschnittsdarstellung ähnlich Fig. 25 mit zwei im Randbereich aufeinander abgestützten Auflageböden,
- Fig. 27: eine Seitenansicht der in einer unbelegten Stapelstellung befindlichen Auflageböden gemäß Fig. 23 mit rechteckiger Stapelfläche,

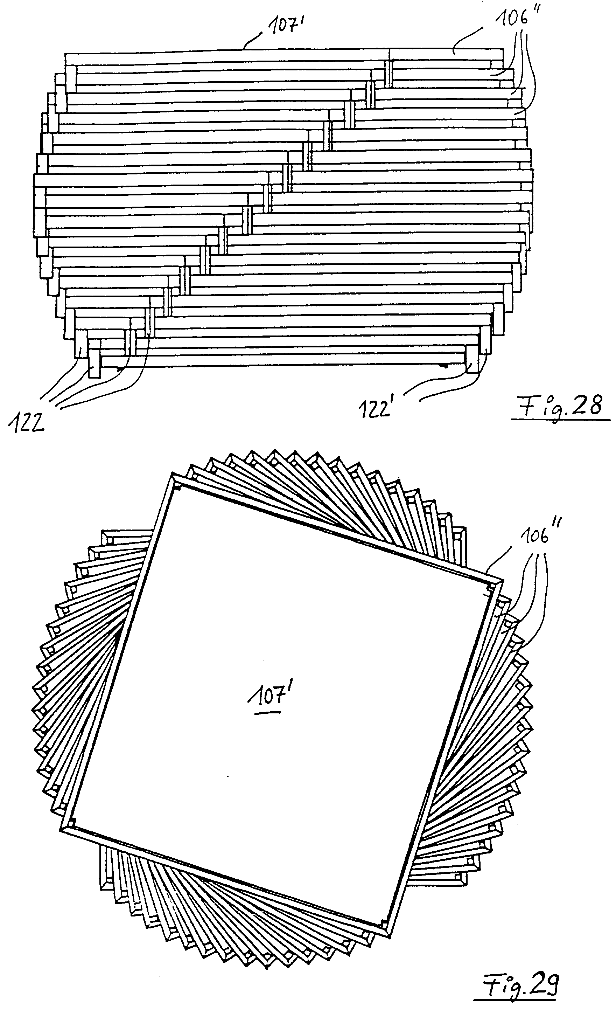

- Fig. 28: eine Seitenansicht ähnlich Fig. 27 mit quadratischen Auflageböden, und
- Fig. 29: eine Draufsicht auf die Stapelung gemäß Fig. 28.

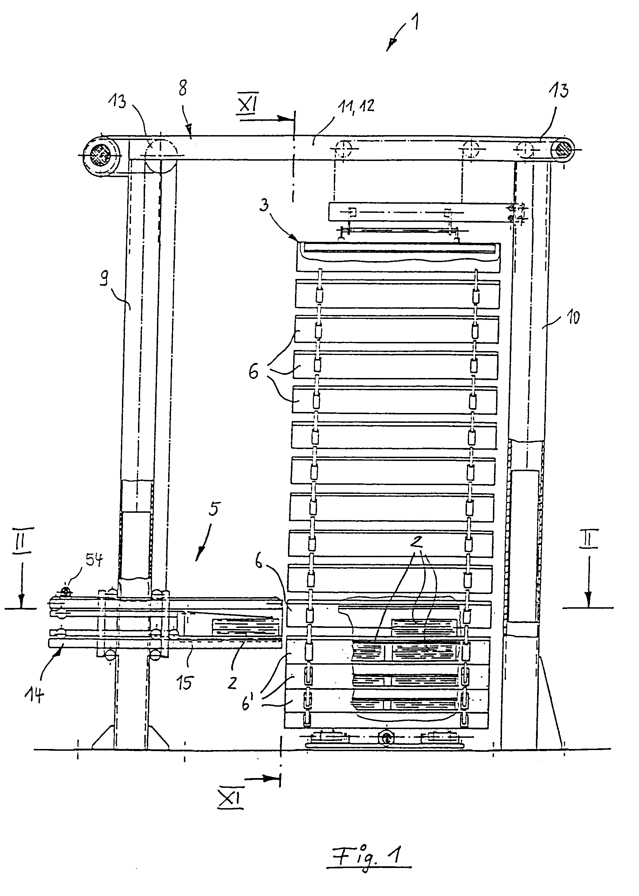

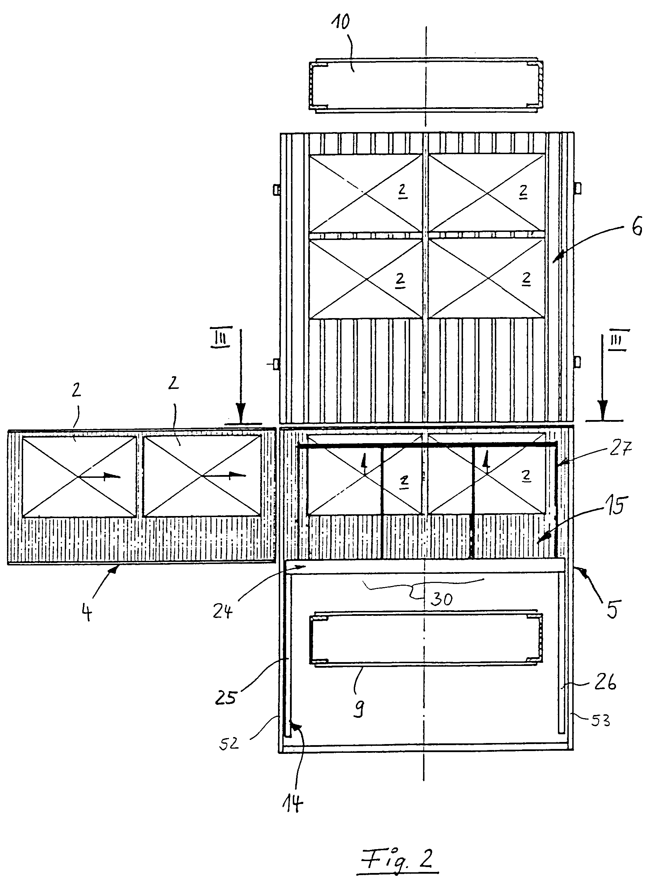

In Fig. 1 ist eine insgesamt mit 1 bezeichnete Palettiervorrichtung dargestellt, mittels der jeweilige Schlauchabschnitte in Form von Schlauchpaketen 2 in eine Etagen-Palette 3 verbringbar sind. Die Schlauchpakete 2 können dabei von einer Schlauchmaschine (nicht dargestellt) über eine Zuführvorrichtung 4 (Fig. 2) in den Bereich einer Ladevorrichtung 5 gefördert werden, mittels der die Schlauchpakete 2 zwischen jeweils in einer auseinandergefahrenen Aufnahmestellung befindliche Auflageböden 6 der Palette 3 einfahrbar sind, wonach die beladenen Auflageböden 6' in einer gegeneinander bewegten Speicherstellung positionierbar sind.

Die Palettiereinrichtung 1 ist mit einem Vorrichtungsgestell 8 versehen, an dessen Vertikalstützen 9,10 einerseits die Ladevorrichtung 5 und andererseits die Palette 3 höhenbeweglich abgestützt sind, wobei im Bereich oberer Querholme 11,12 jeweilige Antriebe 13 zur Bewegungseinleitung vorgesehen sind.

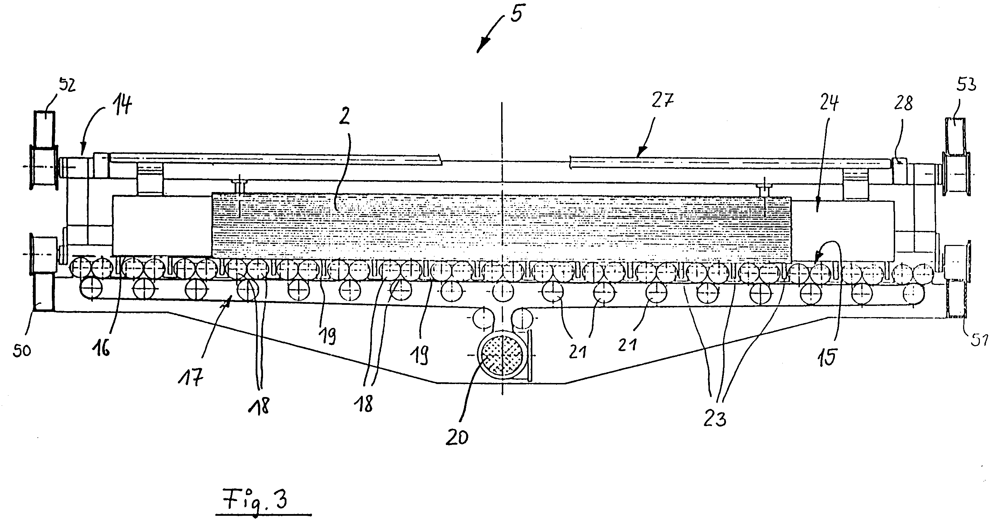

Die Ladevorrichtung 5 weist zur Aufnahme des Schlauchpakets 2 einen am Querholm 11 der Ladevorrichtung 8 senkrecht verfahrbaren Führungswagen 14 auf, mit dem das Schlauchpaket 2 auf einem kammartigen Aufnahmeteil 15 (Fig. 2, Fig. 3) in horizontaler Gegenüberlage zu dem jeweiligen Auflageboden 6,6' verbringbar ist (Fig. 1).

In Fig. 3 verdeutlicht eine vergrößerte Seitenansicht im Bereich der Ladevorrichtung 5 die Zuführposition des Schlauchpakets 2 nach dem Verlassen der Zuführvorrichtung 4 (Fig. 2), wobei das Aufnahmeteil 15 für das Schlauchpaket 2 von mehreren in einer Förderebene 16 das Schlauchpaket 2 bewegenden Förderrollen 17 gebildet ist. Dabei belassen jeweils paarweise angeordnete Auflagerollen 18 zwischen sich einen Spalt 19 und für einen Antrieb der Auflagerollenpaare 18 sind jeweils mit einem Bandantrieb 20 zusammenwirkende Antriebsrollen 21 vorgesehen.

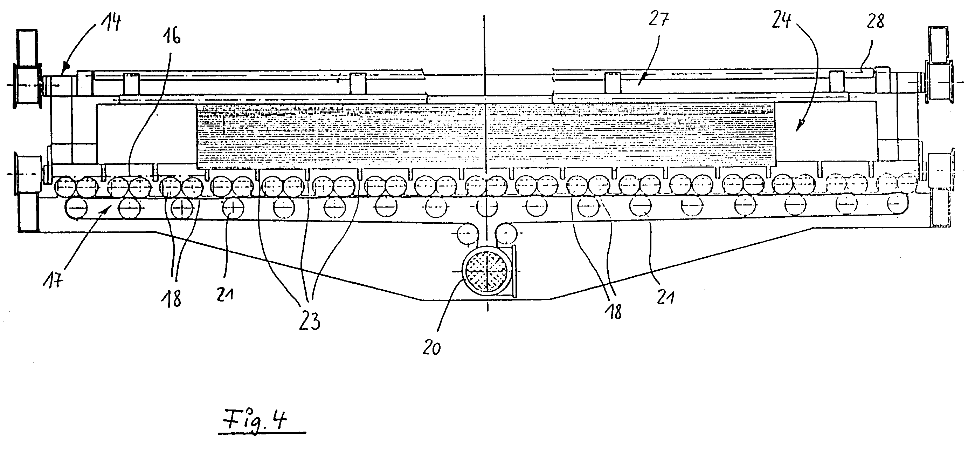

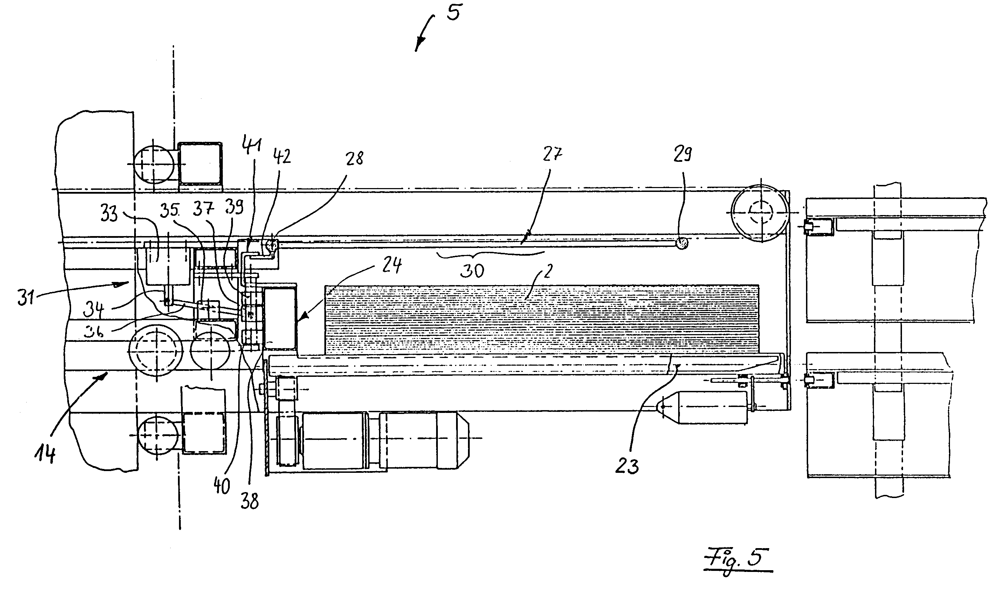

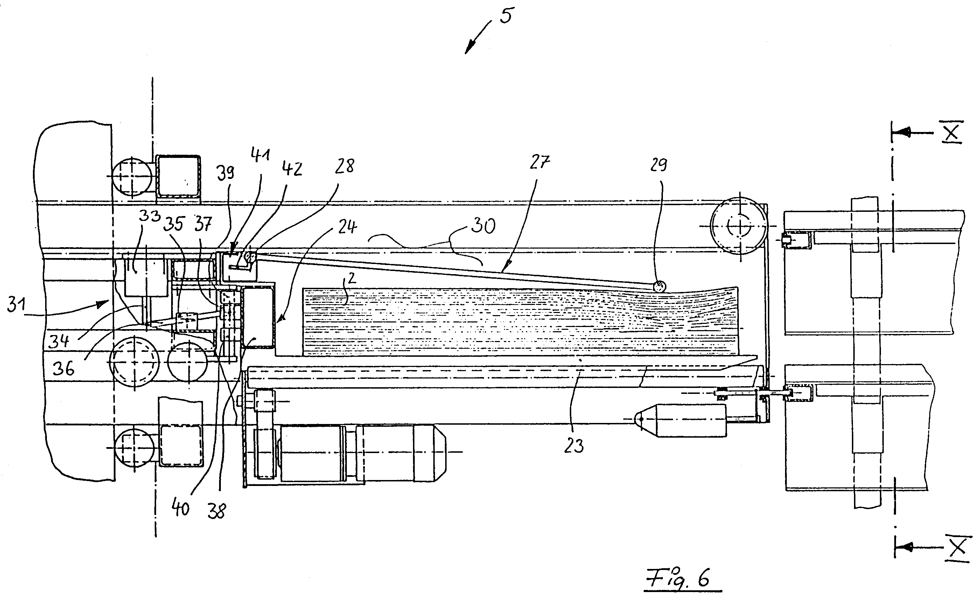

Die Zusammenschau von Fig. 3 und Fig. 4 veranschaulicht, daß das Schlauchpaket 2 in der Ladevorrichtung 5 aus der Ausgangsstellung auf den Auflagerollen 18 in eine zu diesen vertikal beabstandete Transportstellung (Fig. 4) angehoben werden kann. Dazu ist der Führungswagen 14 (Fig. 5) mit einer eine Mehrzahl von Tragzinken 23 aufweisenden Hubgabel 24 versehen, mit der das Schlauchpaket 2 in die vorbeschriebene Transportstellung (Fig. 6, Fig. 4) anhebbar ist. Die Hubgabel 24 ist dabei in dieser Transportstellung horizontal in Bezug auf die Palette 3 hin- und herbewegbar und am Führungswagen 14 über jeweilige Seitenstreben 25,26 (Fig. 2) abgestützt.

Die Hubstellung der Hubgabel 24 gemäß Fig. 4 bzw. Fig. 6 verdeutlicht die vorteilhafte Anordnung eines Haltegliedes 27 im Auflagebereich des Schlauchpakets 2. Das Halteglied ist im Bereich einer Schwenkachse 28 derart mit dem Führungswagen 14 schwenkbeweglich verbunden, daß zumindest ein vorderer Stützteil 29 auf der Oberseite des Schlauchpakets 2 auflegbar ist. In zweckmäßiger Ausführungsform bildet das Halteglied 27 ein am Führungswagen 14 angelenktes und von diesem zur Palette 3 hin auskragendes Zangenteil 30 ( Fig. 2), das über einen gemeinsamen Antrieb 31 mit der Hubgabel 24 unter Erzeugung eines Klemmdruckes eine zangenartige Greifbewegung so ausführen kann, daß das Schlauchpaket 2 bei der Übergabebewegung in die Palette 3 stabil gehalten ist (Fig. 6).

In zweckmäßiger Ausführungsform ist der Antrieb 31 für die Hubgabel 24 mit einem hydraulischen oder pneumatischen Hubzylinder 33 versehen, dessen Kolbenstange 34 einenends an einem mittig über einen Stützblock 35 schwenkbeweglich gelagerten Druckbalken 36 angelenkt ist und dieser anderenends über ein Übertragungsglied 37 mit einem hinteren Querträger 38 der Hubgabel 24 in Wirkverbindung steht.

Das Übertragungsglied 37 ist seinerseits gegen jeweilige an dem Querträger 38 befindliche Anschlagteile 39,40 verfahrbar, so daß in Abhängigkeit von der jeweiligen Bewegungsrichtung der Kolbenstange 34 die Hubgabel 24 in die Transportstellung angehoben (Fig. 6) bzw. in die Ausgangsstellung (Fig. 5) abgesenkt wird.

Zur Synchronisation der vorbeschriebenen Hubbewgung der Hubgabel 24 mit der Zangenklemmung über das Zangenteil 30 ist die Hubgabel 24 im Bereich des Querträgers 38 mit einem gemeimsam mit diesem bewegbaren Widerlagerteil 41 versehen, das in Abhängigkeit von der Hubzylinderbewegung einen endseitig am Zangenteil 30 befindlichen Anschlagteil 42 freigibt (Fig. 6) bzw. diesem eine das Zangenteil 30 anhebende Schwenkbewegung vermittelt (Fig. 5). Damit kann mit geringem technischen Aufwand einer Hubbewegung der Hubgabel 24 eine zangenartige Klemmung mittels dem Zangenteil 30 überlagert werden, wobei das Zangenteil 30 so bemessen ist, daß dieses nach der Freigabe unter Wirkung ihres Eigengewichts eine hinreichende Klemmwirkung auf dem Schlauchpaket 2 erzielt.

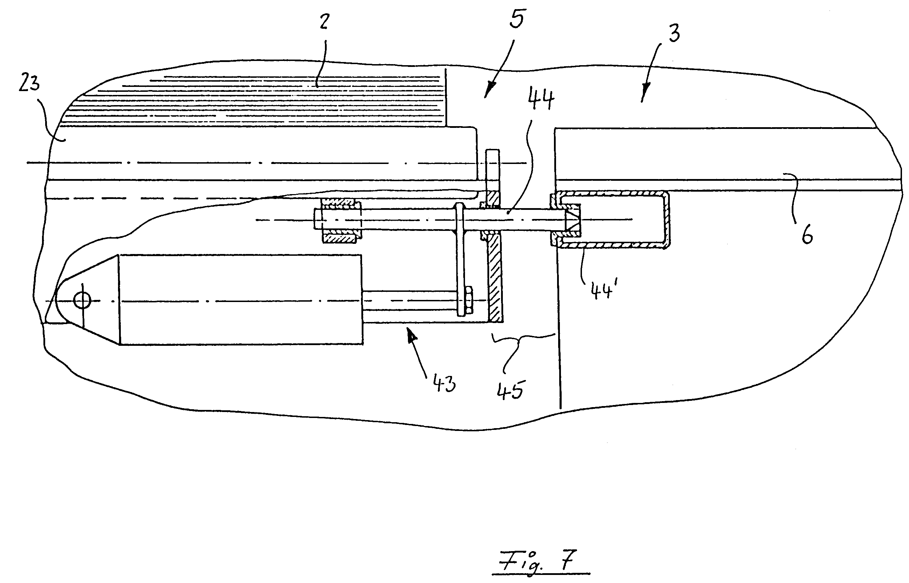

Die vergrößerte Einzeldarstellung gemäß Fig. 7 verdeutlicht, daß die Ladevorrichtung 5 im Übergangsbereich zur Palette 3 in vorteilhafter Ausbildung mit einem die horizontale Gegenüberlage der Bauteile festlegenden Indexbolzen 44 versehen ist, der nach Art eines Positionssensors zur Höhenbestimmung dient und als Stützteil eingesetzt sein kann. Mit diesem Indexbolzen 44 kann der zwischen der Ladevorrichtung 5 und der Palette 3 zum Anfahren der Auflageböden 6 notwendige Positionierungsspalt 45 mit geringem Aufwand so überbrückt werden, daß der Führungswagen 14 in horizontaler Richtung lagegenau in die Palette 3 einfahren kann, nach dem der Indexbolzen 44 über einen Hubzylinder 43 in ein Aufnahmeteil 44' an der Palette 3 eingeschoben ist.

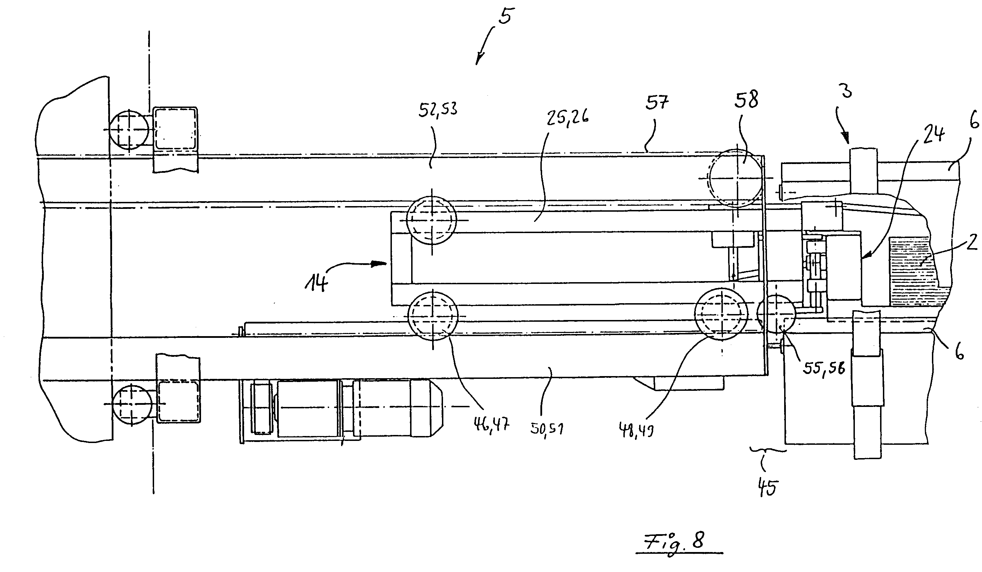

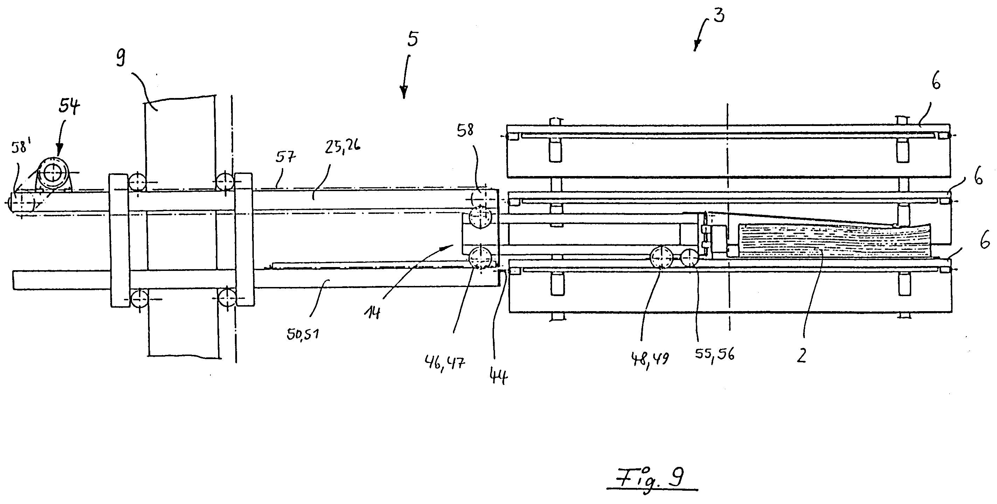

In Fig. 8 ist die Phase veranschaulicht, in der die Einführung des Führungswagens 14 bzw. der Hubgabel 24 in die Palette 3 erfolgt und der Positionierspalt 45 überfahren wird. In zweckmäßiger Ausführungsform ist dazu mit den Seitenstreben 25,26 der Hubgabel 24 (Fig. 2) ein Fahrgestell für den Führungswagen 14 gebildet und dieser über seitliche Rollenpaare 46,47 bzw. 48,49 derart auf den Rollschienen 50,51 sowie jeweiligen oberen Gegenstreben 52,53 abgestützt (Fig. 3), daß die Hubgabel 24 bis in eine hintere Ablageposition in die Palette 3 einfahrbar ist (Fig. 9), wobei das in angehobener Transportstellung befindliche Schlauchpaket 2 in keiner Bewegungsphase mit Teilen der Palette 3 in Berührung gelangt.

Für das Überfahren des Positionsspaltes 45 (Fig. 8) ist ein zusätzliches Rollenpaar 55,56 vorgesehen, mit dem eine erschütterungsfreie Überquerung des Positionsspaltes 45 dadurch erreichbar ist, daß während der Bewegung des Führungswagens 14 eine Abstützung über zumindest vier Rollpunkte gewährleistet ist und so das Schlauchpaket 2 durch einen stoßfreien Bewegungsablauf keine Verrutschungen erfährt.

Für einen kontinuierlichen Antrieb des Führungswagens 14 ist im Bereich der oberen Streben 52,53 ein Antrieb 54 (Fig. 9) vorgesehen, der mittels einer Kette 57 oder dgl. und einer vorderen Umlenkrolle 58 die jeweilige Horizontalbewegung des Führungswagens 14 frei von ruckartigen Bewegungen einleitet.

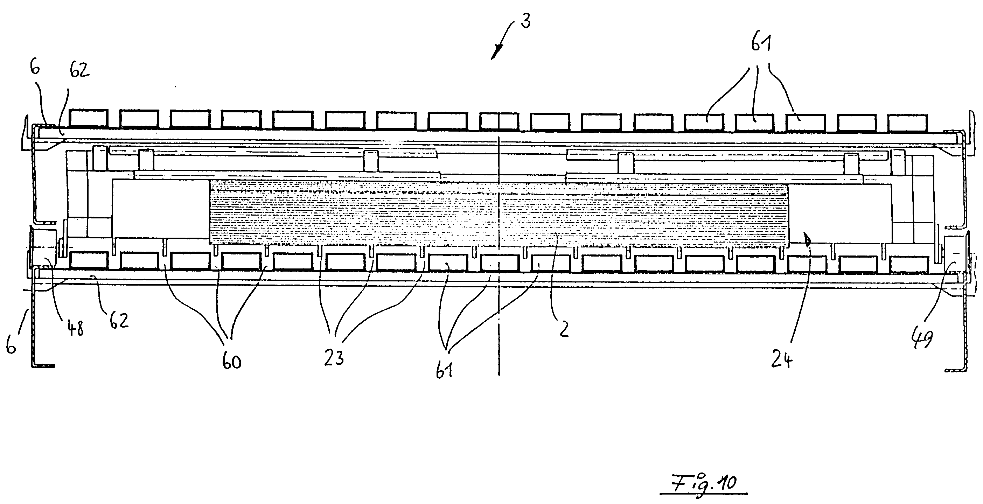

Die Schnittdarstellung gemäß Fig. 10 verdeutlicht den Einschubvorgang des Schlauchpakets 2 zwischen zwei Auflageböden 6 der Palette 3, wobei die Tragzinken 23 der Hubgabel 24 im Bereich eines Aufnahmespaltes 60 zwischen jeweilige Auflageschienen 61 des sich in Beladestellung befindlichen Auflagebodens 6 bewegbar sind. In zweckmäßiger Ausführungsform ist jeder Auflageboden 6 unterhalb der Auflageschienen 61 mit einer nach Beladung der Auflageböden 6 einzeln betätigbaren Preßplatte 62 versehen, die nach dem Absenken auf die Schlauchpakete 2 eine Zusammenpressung der Schlauchabschnitte ermöglicht.

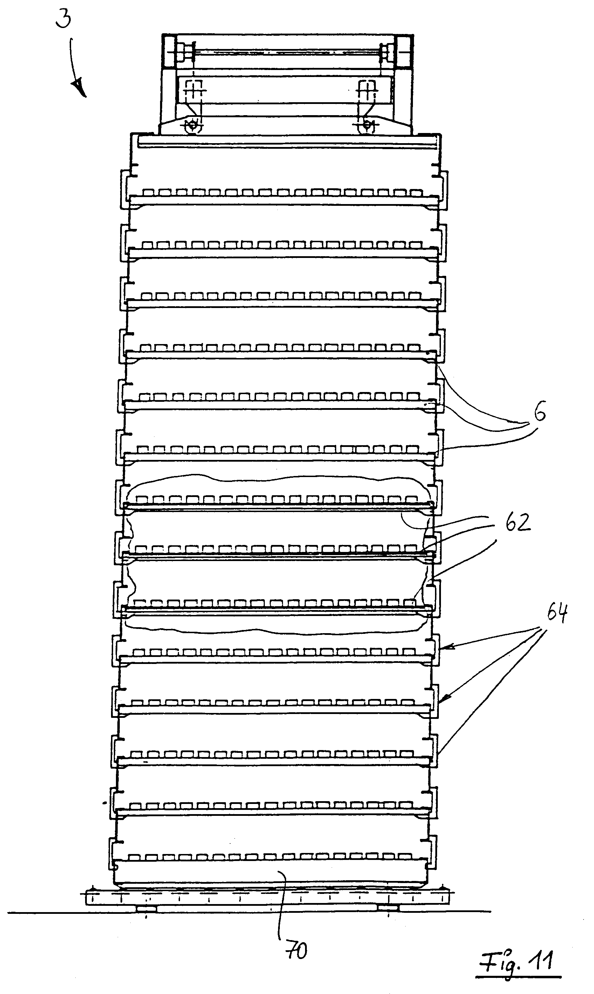

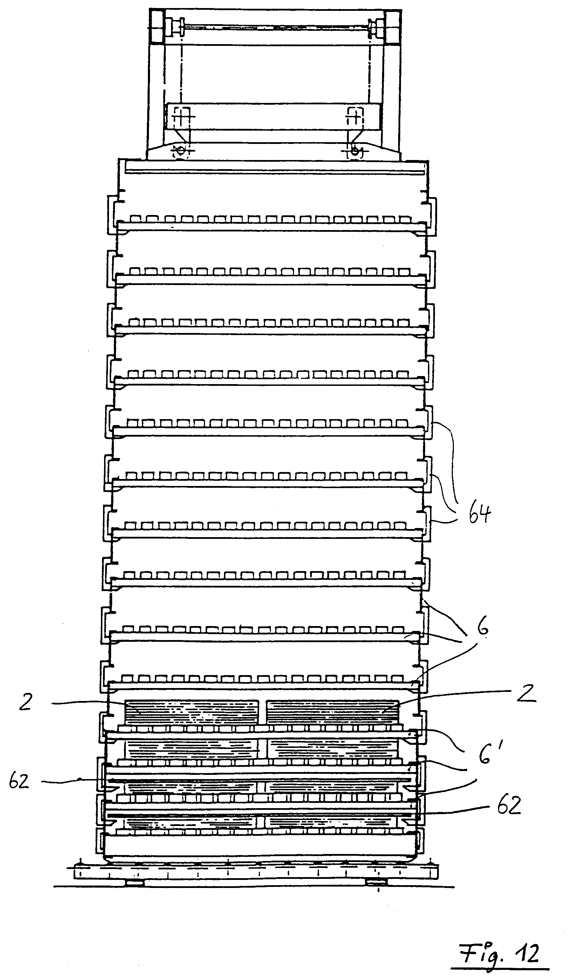

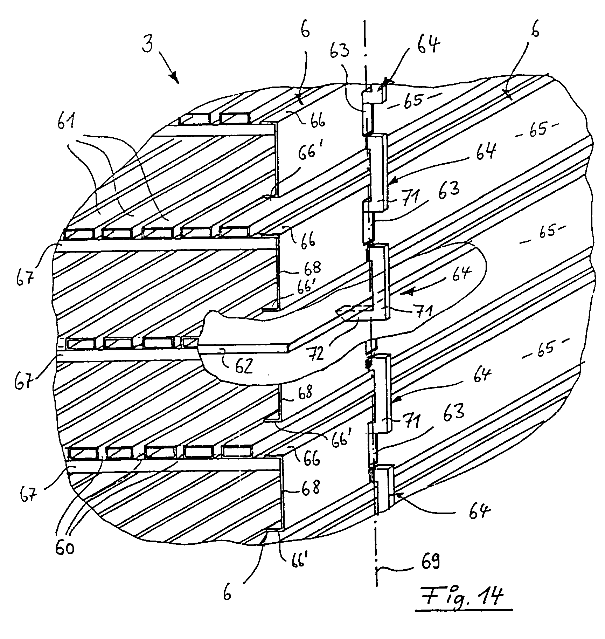

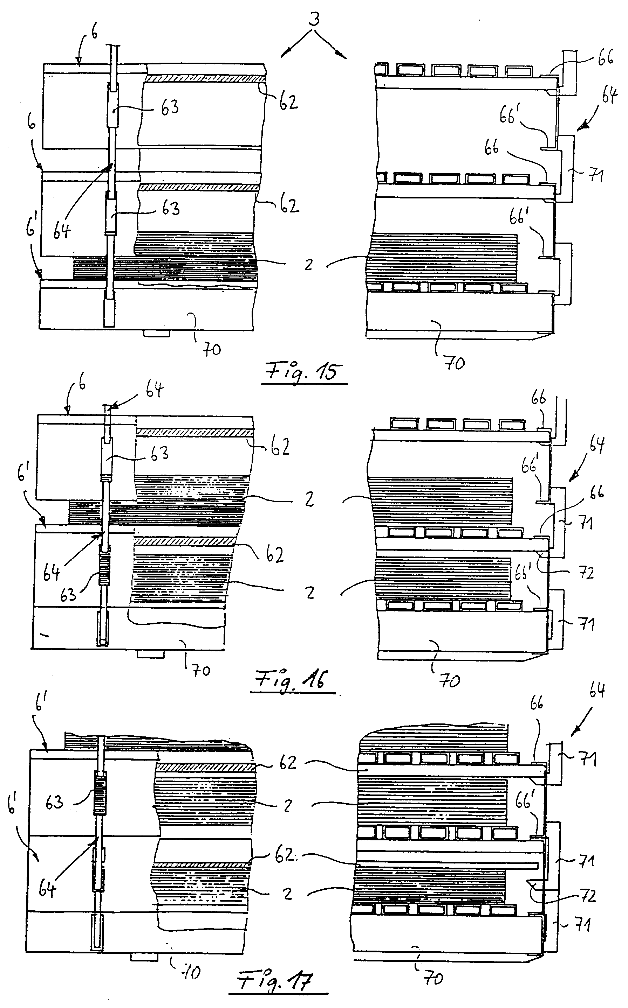

Zur Verdeutlichung dieses Zusammenpressens ist in Fig. 11 bis Fig. 13 eine erste Ausführungsform der erfindungsgemäßen Etagen-Palette 3 in Einzeldarstellungen veranschaulicht, wobei die Auflageböden 6,6' der Palette 3 untereinander durch seitliche, in vertikalen seitlichen Führungsschlitzen 63 der Auflageböden 6,6' (Fig. 14) höhenbeweglich geführte Trag- und Stützkonsolen 64 verbunden sind und die Konsolen 64 zugleich eine jedem Auflageboden 6,6' zugeordnete Preßplatte 62 für eine Preßauflage auf den Schlauchpaketen 2 freigebbar abstützen (Fig. 15 bis 17).

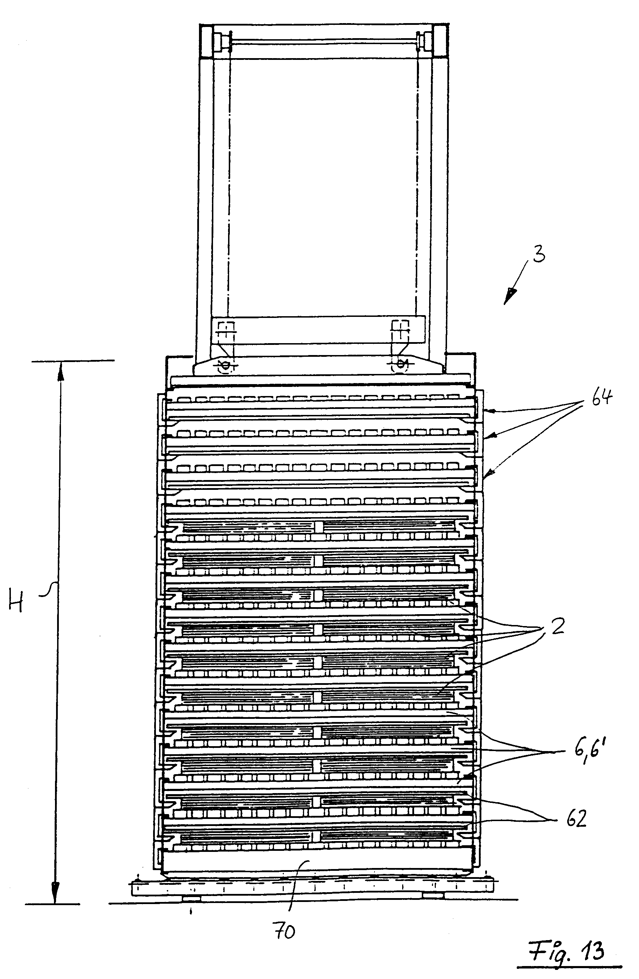

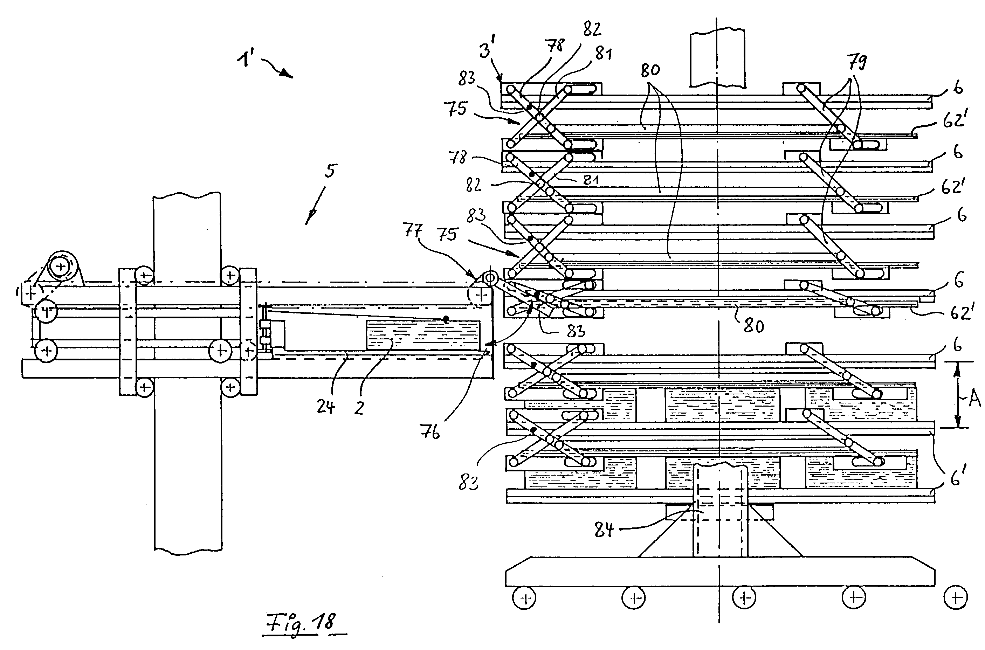

Die vergrößerte Ausschnittsdarstellung gemäß Fig. 14 veranschaulicht die zweckmäßige Ausbildung der Auflageböden 6,6' mit seitlichen U-Profilträgern 65, deren jeweils oberer Profilschenkel 66 über zwei Querträger 67 die zwischen sich den Aufnahmespalt 60 belassenden Auflageschienen 61 abstützt, wobei am Basissteg 68 des U-Profilträgers 65 sowohl die Führungsschlitze 63 vorgesehen als auch die Konsolen 64 in einer gemeinsamen Stützebene 69 angeordnet sind. Die Führungsschlitze 63 sind dabei bis in den Verbindungsbereich von Basissteg 68 und Konsole 64 verlängert, so daß in der jeweiligen Speicherstellung der Palette 3 (Fig. 17 bzw. Fig. 13) die benachbarten U-Profilträger 65 aufeinander abstützbar sind und damit die Palette 3 im Beladezustand eine für den Transport hinreichende Stabilität aufweist.

In zweckmäßiger Ausführungsform sind die Konsolen 64 (Fig. 14) jeweils als L-förmiger Traghaken 71 ausgebildet, dessen freier Schenkel 72 mit einer der Länge der Profilschenkel 66 des U-Profilträgers 65 entsprechenden Eingriffstiefe zwischen die jeweils benachbarten Auflageböden 6,6' vorsteht (Fig. 15 bis 17), so daß die verfügbare Auflagefläche im Bereich der Auflageschienen 61 des jeweiligen Auflagebodens 6,6' keine wesentlichen Einschränkungen erfährt.

Ein Vergleich der Höhe der Palette 3 im ungefüllten Einfahrzustand gemäß Fig. 11 mit der Stapelhöhe der Palette 3 beim Verlassen der Palettiereinrichtung 1 gemäß Fig. 13 macht deutlich, daß nach der Absenkung in die Speicherstellung die Palette 3 eine auch unter beengten Platzverhältnissen sicher bewegbare und über die Anzahl der Auflageböden 6,6' an den jeweiligen Anwendungsfall anpaßbare Gesamthöhe H aufweist.

Mit den Ausschnittsdarstellungen in Fig. 15 bis 17 ist der Belegungsvorgang der Palette 3 (unbelegter Auflageboden:6, belegter Auflageboden: 6') veranschaulicht, wobei ausgehend von einer unteren Stützplatte 70 der Palette 3 nacheinander nach oben fortschreitend die Böden belegt werden. Die jeweils zugeordnete Preßplatte 62 kommt dabei erst dann zur Auflage auf die Schlauchpakete 2, wenn der übergeordnete Auflageboden belegt ist und dieser so abgesenkt wird, daß dessen jeweilige Konsolen 64 die Auflageplatte 62 freigeben (Fig. 17).

In Fig. 18 ist eine zweite Ausführungsform der Palettiereinrichtung 1' veranschaulicht, wobei die der Ladevorrichtung 5 zugeordnete Etagen-Palette 3' mit Auflageböden 6 versehen ist, deren jeweils zugeordnete Preßplatten 62' über eine Haltevorrichtung 75 oberhalb des jeweiligen Auflagebodens 6 und in senkrechter Richtung bewegbar in der Palette 3' abgestützt sind. Die dargestellte Positionierung der Ladevorrichtung 5 und der Palette 3' zueinander verdeutlicht dabei, daß die Preßplatte 62' jeweils für die Einführung des auf der Hubgabel 24 befindlichen Schlauchpakets 2 über ein an der Ladevorrichtung 5 befindliches Hubglied 77 in eine Freigabestellung entsprechend einer Pfeilrichtung 76 anhebbar und danach die Preßplatte 62' in Richtung auf den jeweiligen Auflageboden 6' hin in die preßstellung absenkbar ist.

In vorteilhafter Ausführung ist die Haltevorrichtung 75 mit zumindest einem vorderen und einem hinteren Schwenkarm 78,79 versehen, die jeweils einenends schwenkbeweglich mit der Preßplatte 62' verbunden und anderenends am Auflageboden 6 schwenkbeweglich abgestützt sind. Dabei ist über eine zwischen den beiden Schwenkarmen 78,79 befindliche gemeinsame Führungsstange 80 eine Wirkverbindung gebildet, die eine gleichmäßige Hubbewegung der Preßplatte 62' ermöglicht.

In der dargestellten Ausführungsform ist die Haltevorrichtung 75 im Bereich des vorderen Schwenkarmes 78 mit einem zusätzlichen Stützarm 81 versehen, der über ein Gelenk 82 mit dem Schwenkarm 78 eine Scherenmechanik bildet, die eine besonders leichtgängige und bewegungsstabile Halterung für die jeweilige Preßplatte 62' ermöglicht.

Zur Bewegungseinleitung auf die Preßplatte 62' ist in zweckmäßiger Ausführungsform an dem Schwenkarm 78 der Scherenmechanik ein mit dem an der Ladevorrichtung 5 befindlichen Hubglied 77 in Abstützungseingriff bringbarer Stützbolzen 83 vorgesehen, über den in Abhängigkeit von der jeweiligen Bewegungsrichtung der Ladevorrichtung 5 den Schwenkarmen 78,79 eine als Hubbewegung der Preßplatte 62' wirksame Schwenkbewegung (Pfeil 76) vermittelbar ist.

Die Etagen-Palette 3' ist mit den über die Haltevorrichtung 75 individuell anhebbaren und absenkbaren Preßplatten 62' besonders geeignet für kleinere Speicherkapazitätzen bei häufig wechselndem Auflagemuster, wobei die Auflageböden 6 der Palette 3' in zweckmäßiger Ausführung an einem gemeisamen Gestell 84 lagestabil abgestützt sind und dabei zwischen den jeweils benachbarten Auflageböden 6 ein konstanter Abstand A gebildet ist. Damit kann mit geringem technischem Aufwand eine Anpassung an kundenspezifisch unterschiedlich hohe Paletten 3' erreicht werden.

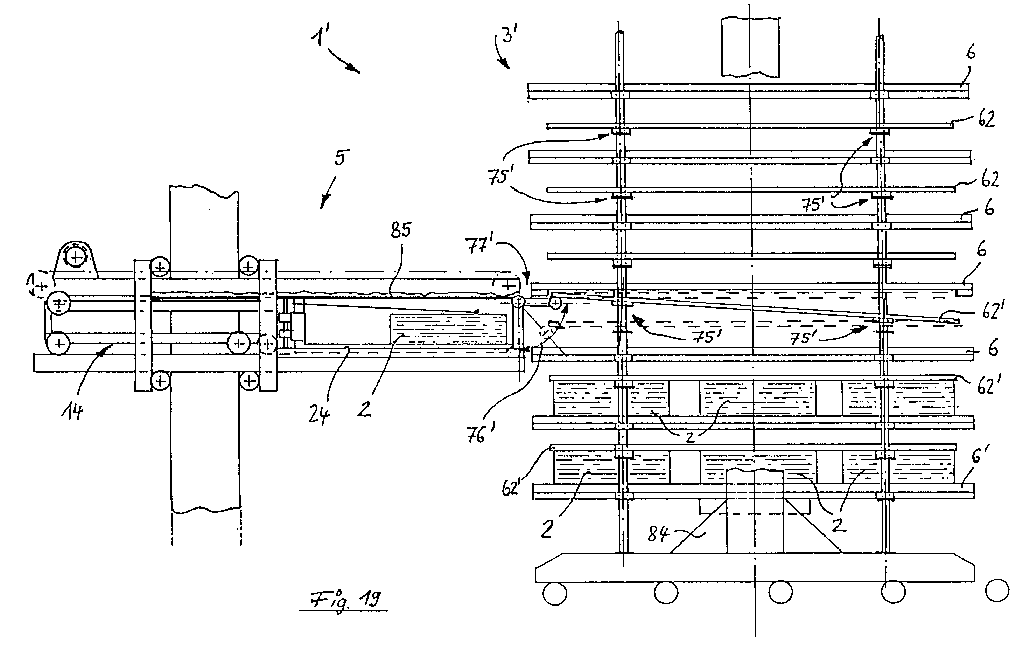

In Fig. 19 weist die Etagen-Palette 3' zwischen den Auflageböden 6,6' in zweckmäßiger Ausbildung als Auflageglieder ausgebildete Haltevorrichtungen 75' auf, mit denen die jeweilige Preßplatte 62' in der Ruhestellung so abgestützt ist, daß in Abhängigkeit von der Bewegung des Führungswagens 14 das Hubglied 77' die dargestellte Schrägstellung der Preßplatte 62' bewirkt und bei weiterem Einschub des Führungswagens 14 in die Palette 3' die Preßplatte auf einem Stützteil 85 aufliegt. Nach der Ablage des Schlauchpakets 2 in der Palette 3' senkt sich die Preßplatte 62' synchron mit der Rückbewegung des Führungswagens 14 auf dem Paket 2 ab. Dabei ist die Preßplatte 62' jeweils in den zusammenwirkenden Bauteilen der Haltevorrichtung 75' so geführt, daß eine kantengerade Pressung der Schlauchpakete 2 erreichbar ist.

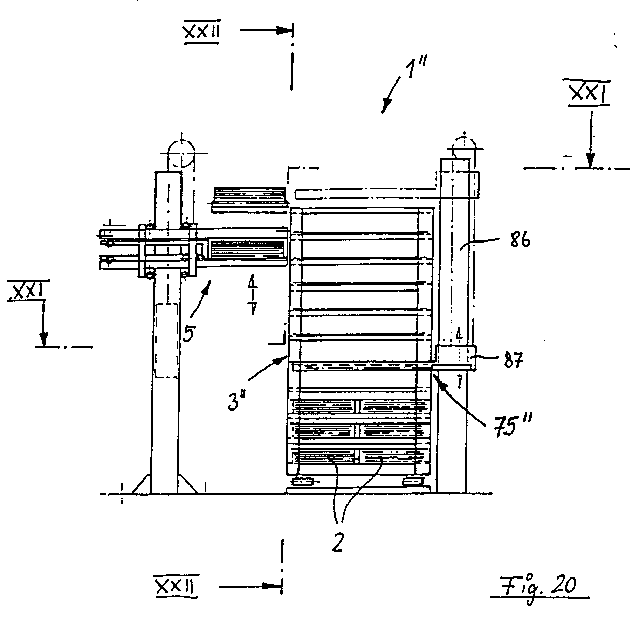

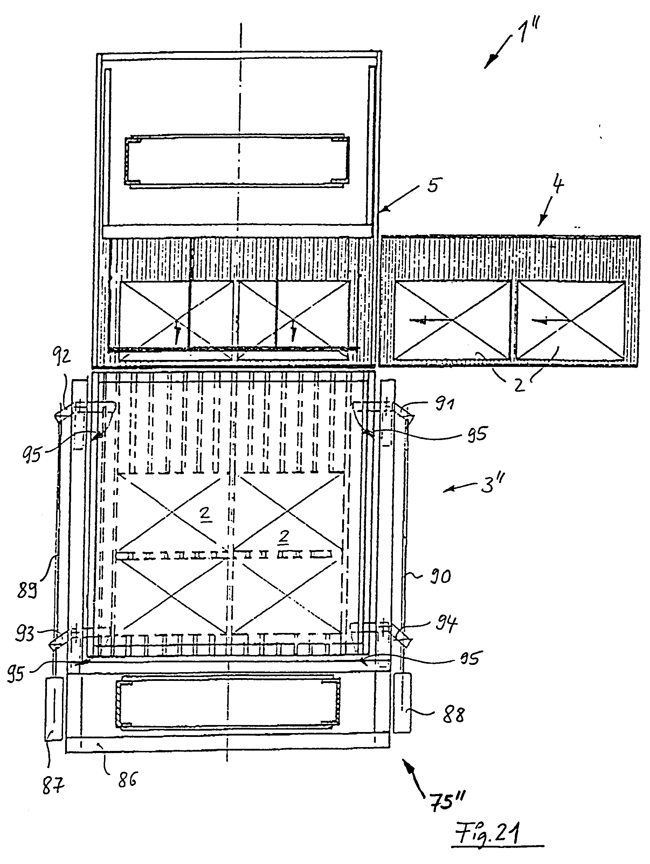

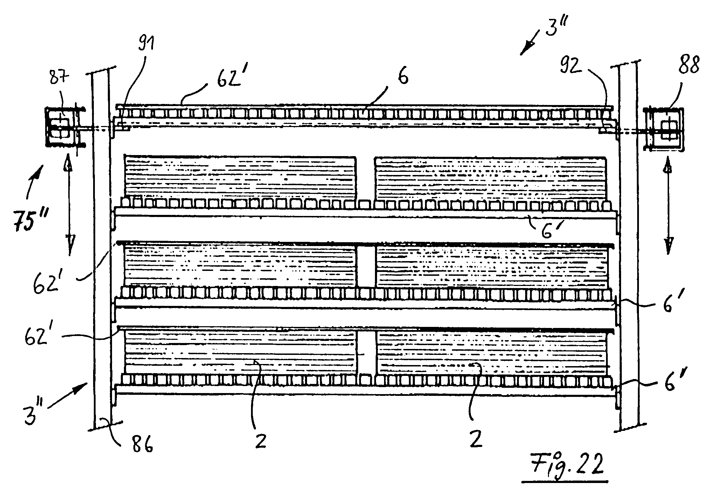

In Fig. 20 ist eine dritte Ausführungsform der Palettiereinrichtung 1'' dargestellt, deren Etagen-Palette 3'' mit einer den jeweiligen Preßplatten 62' der Auflageböden 6 (Fig. 22) zugeordneten Hubvorrichtung 75'' versehen ist, die zwei dem jeweils zu befüllenden Auflageboden 6 der Palette 3'' über ein Führungsgestell 86 zugeordnete und über jeweilige höhenbewegliche Hubglieder 87,88 (Fig. 21) bewegliche Hubarme 89,90 aufweist.

In zweckmäßiger Ausführungsform sind die Hubarme 89,90 dabei mit zwischen die Auflageböden 6 seitlich einschwenkbaren, paarweise gegenüberliegenden Schwenkfingern 91,92 bzw. 93,94 versehen, die über einen synchronen Bewegungsvorgang (Pfeile 95) zwischen die Auflageböden 6 so bewegt werden können, daß die jeweiligen Preßplatten 62' in die in Fig. 22 dargestellte Freigabestellung einzeln anhebbar sind und sofort nach Belegung des jeweiligen Auflagebodens 6' eine gesteuerte Absenkung der zugeordneten Preßplatte 62' auf die jeweiligen Schlauchpakete 2 ausführbar und damit deren verzögerungsfreie Zusammenpressung erreicht ist.

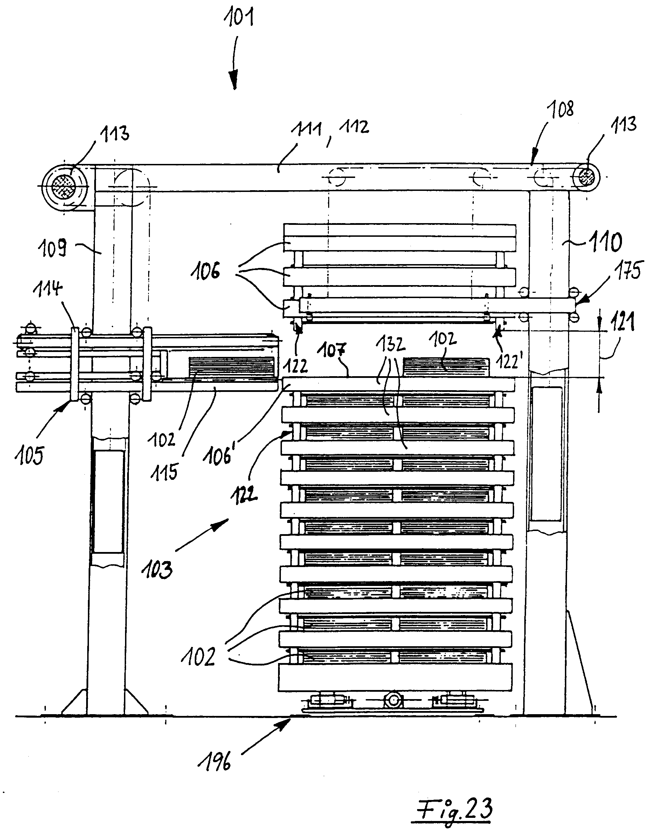

In Fig. 23 ist eine insgesamt mit 101 bezeichnete vierte Ausführungsform der Palettiervorrichtung dargestellt, mittels der jeweilige Schlauchabschnitte in Form von Schlauchpaketen 102 in eine Etagen-Palette 103 verbringbar sind. Die Schlauchpakete 102 werden dabei mittels einer Ladevorrichtung 105 zwischen einem angehobenen Auflageboden 106 und einen in einer Aufnahmestellung befindlichen Auflageboden 106' eingefahren und auf letzterem im Bereich einer Stapelfläche 107 abgesetzt.

Die Palettiereinrichtung 101 ist mit einem Vorrichtungsgestell 108 versehen, an dessen Vertikalstützen 109,110 einerseits die Ladevorrichtung 105 und andererseits die Palette 103 höhenbeweglich abgestützt sind, wobei im Bereich oberer Querholme 111,112 jeweilige Antriebe 113 zur Bewegungseinleitung vorgesehen sind.

Die Ladevorrichtung 105 weist zur Aufnahme des Schlauchpakets 102 einen an der Vertikalstütze 109 der Ladevorrichtung 108 senkrecht verfahrbaren Führungswagen 114 auf, auf dem das Schlauchpaket 102 auf einem kammartigen Aufnahmeteil 115 in die dargestellte horizontale Gegenüberlage zu dem jeweiligen Auflageboden 106' verbringbar ist (Fig. 23).

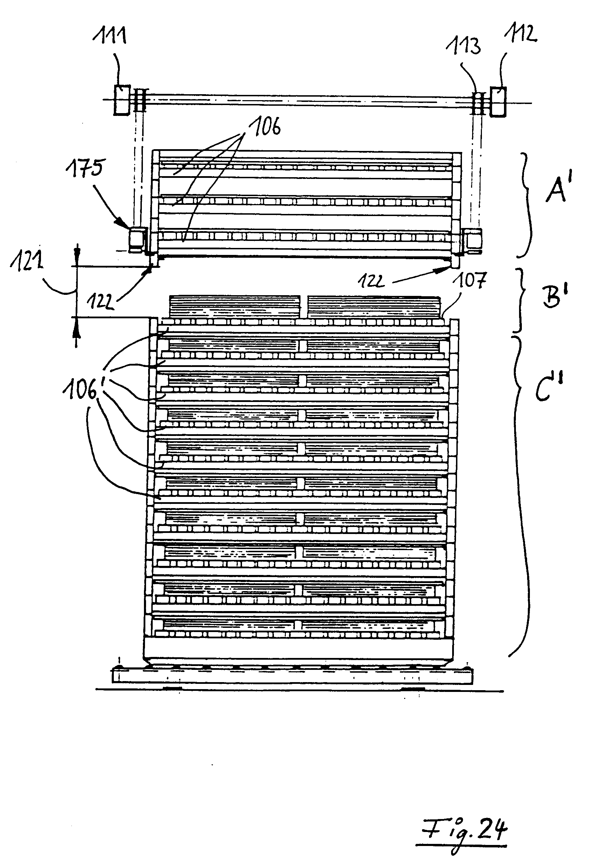

Die Etagen-Palette 103 ist in vorteilhafter Ausführung von einem senkrechten Turm untereinander unverbundener Auflageböden 106,106' gebildet, die einzeln aus einer unbelegten Stapelstellung A' über die Aufnahmestellung B' in die Speicherstellung C' bewegbar sind, wobei eine Hubvorrichtung 175 für die in der angehobenen Stapelstellung C' befindlichen Auflageböden 106 im Bereich der Vertikalstütze 110 höhenbeweglich so abgestützt ist, daß ein für die Einführung der Ladevorrichtung 105 bzw. der Schlauchpakete 102 frei passierbarer Abstand 121 gebildet werden kann (Fig. 24).

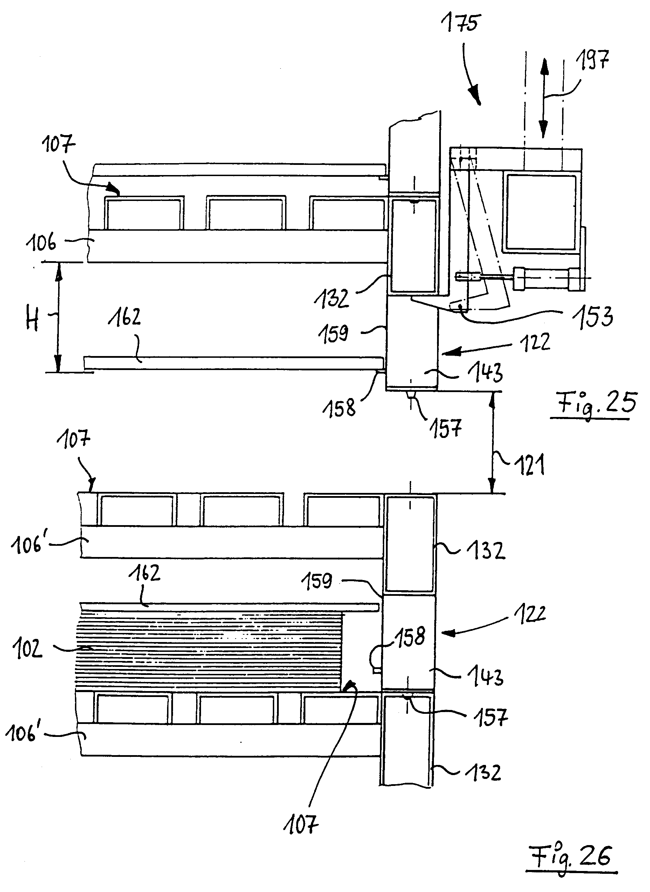

Die Zusammenschau gemäß Fig. 25 und Fig. 26 verdeutlicht in einer vergrößerten Ausschnittsdarstellung, daß an jedem einzelnen Auflageboden 106 bzw. 106' zugleich eine Preßplatte 162 selbsttätig freigebbar abgestützt ist, die unmittelbar dem nächstunteren, zuvor in seiner Speicherstellung C' verbrachten Auflageboden 106' (Fig. 26) für eine Preßauflage auf dessen Schlauchpaketen 102 zugeordnet ist. Die Auflageböden 106' sind in dieser Speicherstellung C' in einem unmittelbaren gegenseitigen Abstützungseingriff gehalten.

Die Auflageböden 106,106' sind dazu in zweckmäßgier Ausführung mit der in Form eines rechtwinkligen Parallelogramms ausgebildeten Stapelfläche 107 versehen, die zumindest im Bereich zweier gegenüberliegender Seitenränder jeweils in den Abstützungseingriff verbringbare senkrechte Stützen 122,122' aufweist. In der dargestellten Ausführungsform der Palettiervorrichtung 101 gemäß Fig. 23 bis 27 sind die Stützen 122,122' jeweils von paarweise an einem Längsträger 132 der Auflageböden 106,106' angeordneten Stützfüßen 143 gebildet. Für einen lagestabilen Abstützungseingriff der Auflageböden 106,106' (Fig. 26) sind die Stützen 122,122' am jeweils freien Ende mit zumindest einem in den darunterliegenden Auflageboden eingreifenden vertikalen Fixierstift 157 versehen.

In Fig. 25 und Fig. 26 ist außerdem die in vertikaler Richtung frei abhebbare Abstützung der Preßplatte 162 verdeutlicht, wobei diese von eine waagerechte Stützfläche darbietenden Auflagen 158 an paarweise einander gegenüberliegenden Innenseiten 159 der senkrechten Stützen 122,122' gehalten ist. Die Auflagen 158 sind dabei zweckmäßig im unteren Endbereich der senkrechten Stützen 122,122' angeordnet, so daß damit auch bei geringen Stapelhöhen der Schlauchpakete im Aufnahmeraum H eine Pressung mittels der Preßplatte 162 erfolgt.

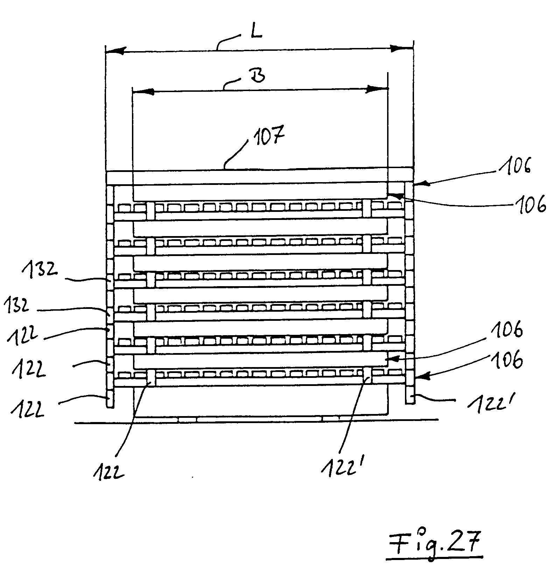

In Fig. 27 ist in einer Prinzipdarstellung eine raumsparende, insbesondere beim Leertransport anwendbare Stapelstellung der Auflageböden 106 dargestellt, wobei deren durch die Länge L und die Breite B definierte Rechteckkontur mit geringem Aufwand die Stapelung zu einem Turm unverbundener Auflageböden ermöglicht. Dabei sind die Auflageböden 106 in der dargestellten Ausführungsform jeweils um 90° versetzt zueinander angeordnet und in vertikaler Richtung so in der Stapelstellung aufeinander abgelegt, daß ein raumsparender Transport möglich ist. Für den Einsatz der Auflageböden 106 in der Palettiervorrichtung 101 (Fig. 23) können die Auflageböden 106 in die dargestellte, auf einen Flurförderer 196 transportierbare Betriebsstellung so umgestapelt werden, daß die vorbeschriebene Beladung mittels der Hubvorrichtung 175 und der Ladevorrichtung 105 mit hoher Geschwindigkeit erreichbar ist.

In Fig .28 sind die Stapelflächen 107' der Auflageböden 106'' in einer zweiten Ausführungsform jeweils quadratisch ausgebildet, so daß für einen Transport der unbeladenen Auflageböden 106'' deren in vertikaler Richtung abstandslose Stapelstellung dadurch erreicht wird, daß die Auflageböden 106'' jeweils um eine Hochachse drehversetzt aufeinander abgelegt werden und die jeweiligen Stützen 122,122' frei nach unten ragen (Fig. 29).

In Fig. 25 verdeutlicht die vergrößerte Ausschnittsdarstellung der Hubvorrichtung 175, daß diese im Bereich zumindest eines Seitenrandes des jeweiligen Auflagebodens 106 mit einem als Schwenkhebel ausgebildeten Betätigungsglied 153 den ein Eingriffsteil bildenden Längsträger 132 so untergreift, daß einzelne oder auch mehrere Auflageböden 106 gleichzeitig in der Hubrichtung 197 angehoben bzw. abgesenkt werden können und der Beladevorgang bzw. die Stapelung bei gleichzeitiger Absenkung der Preßplatte 162 auf den Schlauchpaketen 102 möglich ist.

Die vorbeschriebene Einrichtung ist mit umgekehrtem Bewegungsablauf und ohne zusätzliche Hilfsmittel bei der Depalettierung der Schlauchpakete 102 einsetzbar.

## Patentansprüche

1. Verfahren zum Palettieren von durch eine Längsklebenaht zur Schlauchform geschlossenen Schlauchabschnitten aus Papier oder dgl. Materialen zur Herstellung von Säcken oder Beuteln, wobei die Schlauchabschnitte in Form von Schlauchpaketen (2) von einer Schlauchmaschine einer Palettiereinrichtung (1) mit einer Ladevorrichtung (5) zugeführt werden, mit der die Schlauchpakete (2) einzeln oder gruppenweise einem jeweiligen Auflageboden (6, 6') einer Etagen-Palette (3) übergeben und in einer Speicherstellung der Paletten (3) zwischen dem Vorgang des Palettierens und eines späteren Depalettierens auf ihrem jeweiligen Auflageboden (6, 6') flächig zusammengepreßt gehalten werden, **dadurch gekennzeichnet**, daß zur Durchführung eines Palettiervorgangs die Schlauchpakete (2) in der Ladevorrichtung (5) angehoben, sodann in eine Lage mit Abstand oberhalb des Auflagebodens (6, 6') in die Palette (3) eingefahren und bei Erreichen der vorgesehenen Position auf dem Auflageboden (6, 6') abgelegt werden, dessen Schlauchpakete (2) sodann vor Belegung des nächstfolgenden Auflagebodens (6, 6') flächig zusammengepreßt werden, derart, daß die flächige Zusammenpressung für den jeweiligen Auflageboden (6, 6') einzeln erfolgt.

2. Verfahren nach Anspruch 1, dadurch gekennzeichnet, daß das jeweilige Schlauchpaket während des Einfahrens in die Palette bis zur Beendigung seiner Absetzbewegung unter Klemmdruck gehalten wird.

3. Verfahren nach Anspruch 1 und 2, dadurch gekennzeichnet, daß das Anheben des Schlauchpakets und die Klemmdruckerzeugung gleichzeitig herbeigeführt werden.

4. Verfahren nach einem der Ansprüche 1 bis 3, dadurch gekennzeichnet, daß die Auflageböden der Palette fortschreitend vom untersten zum obersten Auflageboden mit Schlauchpaketen beladen werden.

5. Einrichtung zum Palettieren von durch eine Längsklebenaht zur Schlauchform geschlossenen Schlauchabschnitten aus Papier oder dgl. Materialien zur Herstellung von Säcken oder Beuteln, bestehend aus einer Zuführvorrichtung (4) für die Schlauchpakete (2), einer diese übernehmenden Ladevorrichtung (5) und einer Etagen-Palette (3) mit einer Mehrzahl zwischen einer auseinandergefahrenen Aufnahmestellung und einer gegeneinander bewegten Speicherstellung verlagerbaren Auflageböden (6, 6'), die in senkrechter Richtung übereinander in einem Vorrichtungsgestell (8) zu beladen sind, wobei die Ladevorrichtung (5) einen vorzugsweise am Vorrichtungsgestell (8) senkrecht verfahrbaren Führungswagen (14) zur Positionierung der auf einem kammartigen Aufnahmeteil (15) abgestützten Schlauchpakete (2) in horizontale Gegenüberlage zu dem jeweiligen Auflageboden (6, 6') aufweist, **dadurch gekennzeichnet**, daß der Führungswagen (14) mit einer eine Mehrzahl von Tragzinken (23) aufweisenden Hubgabel (24) versehen ist, die zwischen einer gegenüber dem Aufnahmeteil (15) geringfügig nach unten versetzten Ausgangsstellung und einer vertikal nach oben von dieser beabstandeten Transportstellung vertikal und in dieser horizontal in bezug auf die Palette (3) hin- und herbewegbar am Führungswagen (14) abgestützt ist, und daß jedem Auflageboden (6, 6') eine einzeln betätigbare Preßplatte (62) zum Zusammenpressen der Schlauchpakete (2) zugeordnet ist, derart, daß für den jeweiligen Aufnahmeboden (6, 6') einzeln eine flache Zusammenpressung der Schlauchpakete (2) erfolgt.

6. Einrichtung nach Anspruch 5, dadurch gekennzeichnet, daß der Hubgabel (24) ein zumindest mit der Oberseite des Schlauchpakets (2) in Druckanlage bringbares Halteglied (27) zugeordnet ist.

7. Einrichtung nach Anspruch 6, dadurch gekennzeichnet, daß das Halteglied (27) als am Führungswagen (14) angelenktes, von diesem zur Palette (3) hin auskragendes, auf die Oberseite des Schlauchpaketes (2) abschwenkbares Zangenteil (30) ausgebildet ist.

8. Einrichtung nach Anspruch 7, dadurch gekennzeichnet, daß die Hubgabel (24) und das Zangenteil (30) über einen am Führungswagen (14) abgestützten gemeinsamen Antrieb (31) bewegbar sind.

9. Einrichtung nach Anspruch 8, dadurch gekennzeichnet, daß der Antrieb (31) einen Hubzylinder (33) aufweist, dessen Kolbenstange (34) einenends an einem mittig gelagerten Druckbalken (36) angelenkt und dieser anderenends mit einem Übertragungsglied (37) versehen ist, das seinerseits gegen jeweilige an einem Querträger (38) befindliche Anschlagteile (39,40) der Hubgabel (24) verfahrbar und dabei die Hubgabel (24) in die Transport- bzw. Ausgangsstellung verbringbar ist.

10. Einrichtung nach Anspruch 8 oder 9, dadurch gekennzeichnet, daß die Hubgabel (24) im Bereich des Querträgers (38) mit einem gemeinsam mit diesem bewegbaren Widerlagerteil (41) versehen ist, das in Abhängigkeit von der Hubzylinderbewegung einen endseitig am Zangenteil (30) befindlichen Anschlagteil (42) freigibt bzw. diesem eine Schwenkbewegung vermittelt.

11. Einrichtung nach einem der Ansprüche 8 bis 10, dadurch gekennzeichnet, daß die Hubgabel (24) am Führungswagen (14) über ein seitliche Rollenpaare (46,47;48,49) aufweisendes Fahrgestell abgestützt ist, das einen über Umlenkrollen (58,58') und einen Kettenantrieb (57) betätigbaren Antrieb (54) aufweist.

12. Einrichtung nach Anspruch 11, dadurch gekennzeichnet, daß dem jeweils in Einschubrichtung des Führungswagens (14) vorderen Rollenpaar (48,49) ein Stützrollenpaar (55,56) zugeordnet ist.

13. Einrichtung nach einem der Ansprüche 5 bis 12, dadurch gekennzeichnet, daß die Ladevorrichtung (5) im Übergangsbereich zur Palette (3) mit zumindest einem die horizontale Gegenüberlage festlegenden Indexbolzen (44) versehen ist.

14. Einrichtung zum Palettieren von durch eine Längsklebenaht zur Schlauchform geschlossenen Schlauchabschnitten aus Papier oder dgl. Materialien zur Herstellung von Säcken oder Beuteln, bestehend aus einer Zuführvorrichtung (4) für die Schlauchpakete (2), einer diese übernehmenden Ladevorrichtung (5) und einer Etagen-Palette (3) mit einer Mehrzahl zwischen einer auseinandergefahrenen Aufnahmestellung und einer gegeneinander bewegten Speicherstellung verlagerbaren Auflageböden (6), die in senkrechter Richtung übereinander in einem Vorrichtungsgestell (8) zu beladen sind wobei die Ladevorrichtung (5) einen vorzugsweise am Vorrichtungsgestell (8) senkrecht verfahrbaren Führungswagen (14) zur Positionierung der auf einem kammartigen Aufnahmeteil (15) abgestützten Schlauchpakete (2) in horizontaler Gegenüberlage zu dem jeweiligen Auflageboden (6) aufweist, **dadurch gekennzeichnet**, daß die Auflageböden (6, 6') der Palette (3) untereinander durch seitliche, in vertikalen seitlichen Führungsschlitzen (63) der Auflageböden (6, 6') höhenbeweglich geführten Trag- und Stützkonsolen (64) verbunden sind und einzeln betätigbare Preßplatten (62) von den Konsolen (64) für eine Preßauflage auf den Schlauchpaketen (2) freigebbar abgestützt sind, derart, daß für den jeweiligen Aufnahmeboden (6, 6') einzeln eine flache Zusammenpressung der Schlauchpakete (2) erfolgt.

15. Einrichtung nach Anspruch 14, dadurch gekennzeichnet, daß die Auflageböden (6, 6') mit seitlichen U-Profilträgern (65) versehen sind, deren jeweils oberer Profilschenkel (66) über zumindest zwei Querträger (67) mehrere zwischen sich einen Aufnahmespalt (60) belassende Auflageschienen (61) abstützt und am Basissteg (68) des U-Profilträgers (65) sowohl die Führungsschlitze (63) als auch die Konsolen (64) in einer gemeinsamen Stützebene (69) angeordnet sind.

16. Einrichtung nach Anspruch 14 oder 15, dadurch gekennzeichnet, daß die Führungsschlitze (63) jeweils bis in den Verbindungsbereich von Basissteg (68) und Konsole (64) verlängert sind, derart, daß in der Speicherstellung der Palette (3) die Konsolen (64) aufeinander abstützbar sind.

17. Einrichtung nach Anspruch 14 oder 15, dadurch gekennzeichnet, daß der jeweils untere Profilschenkel (66') des jeweils oberen U-Profilträgers (65) in der Speicherstellung auf dem jeweils oberen Profilschenkel (66) des darunter angeordneten U-Profilträgers (65) abstützbar ist.

18. Einrichtung nach einem der Ansprüche 14 bis 17, dadurch gekennzeichnet, daß die Konsole (64) als ein L-förmiger Traghaken (71) ausgbildet ist, dessen freier, die Preßplatte (62) tragender Schenkel (72) mit einer der Länge der Profilschenkel (66, 66') des U-Profilträgers (65) entsprechenden Eingriffstiefe zwischen den Auflageböden (6, 6') vorsteht.

19. Einrichtung zum Palettieren von durch eine Längsklebenaht zur Schlauchform geschlossenen Schlauchabschnitten aus Papier oder dgl. Materialien zur Herstellung von Säcken oder Beuteln, bestehend aus einer Zuführvorrichtung (4) für die Schlauchpakete (2), einer diese übernehmenden Ladevorrichtung (5) und einer Etagen-Palette (3) mit einer Mehrzahl von im festen Abstand zueinander angeordneten Auflageböden (6), die in senkrechter Richtung übereinander in einem Vorrichtungsgestell (8) zu beladen sind, wobei die Ladevorrichtung (5) einen vorzugsweise am Vorrichtungsgestell (8) senkrecht verfahrbaren Führungswagen (14) zur Positionierung der auf einem kammartigen Aufnahmeteil (15) abgestützten Schlauchpakete (2) in horizontaler Gegenüberlage zu dem jeweiligen Auflageboden (6) aufweist, **dadurch gekennzeichnet**, daß die Auflageböden (6) der Palette (3') mit unabhängig voneinander über eine Haltevorrichtung (75;75';75'') im wesentlichen in senkrechter Richtung bewegbaren und oberhalb des jeweiligen Auflagebodens (6,6') in der Palette (3') abgestützten Preßplatten (62') versehen sind, derart, daß die Preßplatte (62') jeweils für die Einführung der Schlauchpakete (2) in eine Freigabestellung anhebbar und bei Ablage der Schlauchpakete (2) auf dem Auflageboden (6,6') in die Preßstellung absenkbar ist.

20. Einrichtung nach Anspruch 19, dadurch gekennzeichnet, daß die Haltevorrichtung (75) mit zumindest einem vorderen und einem hinteren Schwenkarm (78,79) versehen ist, die einenends schwenkbeweglich mit der Preßplatte (62') verbunden und anderenends am Auflageboden (6,6') schwenkbeweglich abgestützt sind, wobei sich zwischen den beiden Schwenkarmen (78,79) zumindest eine gemeinsame Führungsstange (80) erstreckt.

21. Einrichtung nach Anspruch 20, dadurch gekennzeichnet, daß der vordere Schwenkarm (78) über ein eine Scherenmechanik bildendes Gelenk (82) mit einem zusätzlichen Stützarm (81) versehen ist.

22. Einrichtung nach Anspruch 20 oder 21, dadurch gekennzeichnet, daß an einem der Schwenkarme (78) bzw. an der Scherenmechanik ein mit einem an der Ladevorrichtung (5) befindlichen Hubglied (77;77') in Abstützungseingriff bringbarer Stützbolzen (83) vorgesehen ist, über den in Abhängigkeit von der jeweiligen Bewegungsrichtung der Ladevorrichtung (5) den Schwenkarmen (78,79,81) eine als Hubbewegung wirksame Schwenkbewegung (76;76') vermittelbar ist.

23. Einrichtung nach einem der Ansprüche 20 bis 22, dadurch gekennzeichnet, daß die Auflageböden (6,6') über ein Gestell (84) in einem konstanten Abstand (A) zueinander festgelegt sind.

24. Einrichtung nach Anspruch 19, dadurch gekennzeichnet, daß die Haltevorrichtung (75'') von zwei dem jeweils zu befüllenden Auflageboden (6,6') der Palette (3'') über ein Führungsgestell (86) zugeordneten und zumindest ein Hubglied (87,88) aufweisenden Hubarmen (89,90) gebildet ist.

25. Einrichtung nach Anspruch 24, dadurch gekennzeichnet, daß die Hubarme (89,90) zwischen die Auflageböden (6,6') seitlich einschwenkbare, paarweise gegenüberliegende Schwenkfinger (91,92; 93,94) aufweisen, mit denen die Preßplatte (62') in die Freigabestellung anhebbar bzw. in die Preßstellung absenkbar ist.

26. Einrichtung zum Palettieren von durch eine Längsklebenaht zur Schlauchform geschlossenen Schlauchabschnitten aus Papier oder dgl. Materialien zur Herstellung von Säcken oder Beuteln, bestehend aus einer die Schlauchabschnitte als einzelne Schlauchpakete (102) aufnehmenden Etagen-Palette (103) mit einer Mehrzahl zwischen einer Aufnahmestellung und einer gegeneinander bewegten Speicherstellung verlagerbarer Auflageböden (106, 106'), **dadurch gekennzeichnet**, daß die Palette (103) von einem senkrechten Turm untereinander unverbundener Auflageböden (106, 106'; 106'') gebildet ist, die mittels einer Hubvorrichtung (175) einzeln aus einer unbelegten Stapelstellung (A') über die Aufnahmestellung (B') in die Speicherstellung (C') bewegbar sind, die Auflageböden (106, 106'; 106'') in der Speicherstellung (C') in einem unmittelbaren gegenseitigen Abstützungseingriff gehalten sind und jeder einzelne Auflageboden (106, 106'; 106'') zugleich eine Preßplatte (162) selbsttätig freigebbar abstützt, die unmittelbar dem nächstunteren, zuvor in seine Speicherstellung (C') verbrachten Auflageboden (106, 106'; 106'') für eine Preßauflage auf dessen Schlauchpaketen (102) zugeordnet ist.

27. Einrichtung nach Anspruch 26, dadurch gekennzeichnet, daß die Auflageböden (106, 106') eine Stapelfläche (107) in Form eines Rechtecks darbieten, das zumindest im Bereich zweier gegenüberliegender Seitenränder mit in den Abstützungseingriff verbringbaren senkrechten Stützen (122, 122') versehen ist.

28. Einrichtung nach Anspruch 27, dadurch gekennzeichnet, daß die Stützen (122, 122') von paarweise an einem Längsträger (132) angeordneten Stützfüßen (143) gebildet sind.

29. Einrichtung nach Anspruch 27 oder 28, dadurch gekennzeichnet, daß die Stützen (122,122') am jeweils freien Ende mit zumindest einem in den darunterliegenden Auflageboden (106,106') eingreifenden vertikalen Fixierstift (157) versehen sind.

30. Einrichtung nach einem der Ansprüche 26 bis 29, dadurch gekennzeichnet, daß die Auflageböden (106,106) jeweils eine Stapelfläche (107) aufweisen, die von einer durch die Länge L und die Breite B definierten Rechteckkontur gebildet ist.

31. Einrichtung nach Anspruch 30, dadurch gekennzeichnet, daS die Auflageböden (106,106'), vorzugsweise um 90°, versetzt zueinander in vertikaler Richtung stapelbar sind.

32. Einrichtung nach einem der Ansprüche 26 bis 29, dadurch gekennzeichnet, daß die Stapelfläche (107') der Auflageböden (106'') quadratisch ist.

33. Einrichtung nach einem der Ansprüche 26 bis 32, dadurch gekennzeichnet, daß jede Preßplatte (162) von eine waagerechte Abstützung bildenden Auflagen (158) an paarweise einander gegenüberliegenden Innenseiten (159) der senkrechten Stützen (122,122') des zugehörigen Auflagebodens (106,106';106'') in vertikaler Richtung frei abhebbar abgestützt ist.

34. Einrichtung nach Anspruch 33, dadurch gekennzeichnet, daß die Auflagen (158) im unteren Endbereich der senkrechten Stützen (122,122') angeordnet sind.

35. Einrichtung nach einem der Ansprüche 26 bis 34, dadurch gekennzeichnet, daß die Auflageböden (106,106';106'') im Bereich zumindest eines ihrer Seitenränder Eingriffsteile für Betätigungsglieder (153) der Hubvorrichtung (175) aufweisen.

## Claims

1. A method of palletising tube portions of paper or like materials which are closed into a tubular form by a longitudinal glued seam and intended for the production of sacks or bags, whereby the tube portions are fed in the form of tubes packages (2) from a tube-producing machine to a palletising arrangement (1) with a loading device (5) with which the tube packages (2) are transferred singly or in groups to a supporting surface (6, 6') of a tiered pallet (3) and are held with their surfaces pressed together on their respective supporting surface (6, 6') in a storage position of the pallets (3) between the process of palletising and a subsequent depalletising process, characterised in that in order to carry out a palletising operation, the tube packages (2) are raised in the loading device (5), are then introduced into the pallet (3) into a position in which they are at a distance above the supporting surface (6, 6') and, upon reaching the envisaged position on the supporting surface (6, 6'), they are deposited, the tube packages (2) then, prior to occupation of the next supporting surface (6, 6') in sequence, being pressed together flat so that the said flat pressing together is carried out individually for each supporting surface (6, 6').

2. A method according to claim 1, characterised in that the respective tube package is maintained under clamping pressure during insertion into the pallet and until the lowering movement is ended.

3. A method according to claim 1 and 2, characterised in that the raising of the tube package and the generation of clamping pressure are brought about simultaneously.

4. A method according to one of claims 1 to 3, characterised in that the supporting surfaces of the pallet are loaded with tube packages progressively from the extreme lowest to the topmost supporting surface.

5. An apparatus for palletising tube portions of paper or like materials which are closed into a tubular form by a longitudinal glued seam and intended for the production of sacks or bags, consisting of a feed device (4) for the tube packages (2), a loading device (5) for receiving said packages and a tiered pallet (3) with a plurality of supporting surfaces (6, 6') which can be moved between an extended receiving position and a storage position in which they are moved towards one another, said supporting surfaces being loaded in a vertical direction one above another in a frame (8), whereby the loading device (5) comprises a guide carriage (14) preferably adapted for vertical movement on the frame (8) and intended for positioning the tube packages (2) which are supported on a comb-like receiving part (15), in a horizontal position opposite the respective supporting surface (6, 6'), characterised in that the guide carriage (14) is provided with a lifting fork (24) comprising supporting tines (23) and which is supported on the guide carriage (14) so as to be capable of vertical reciprocating movement between a starting position slightly offset downwards in respect of the receiving part (15) and a transport position spaced apart vertically upwardly in respect thereof and in which it is able to move to and fro horizontally in respect of the pallet (3), and in that an individually operable pressing plate (62) for compressing the tube package (2) is associated with each supporting surface (6, 6') so that for the respective receiving surface (6, 6') there is an individual and flat pressing together of the tube package (2).

6. An apparatus according to claim 5, characterised in that the lifting fork (24) has associated with it a supporting member (27) which can be brought to bear under pressure on at least the upper surface of the tube package (2).

7. An apparatus according to claim 6, characterised in that the supporting member (27) is constructed as a tine part (30) articulated on the guide carriage (14) and projecting therefrom in the direction of the pallet (3) and adapted to be pivoted onto the upper surface of the tube package (2).

8. An apparatus according to claim 7, characterised in that the lifting fork (24) and the tine part (30) are adapted to be moved by a common drive (31) supported on the guide carriage (14).

9. An apparatus according to claim 8, characterised in that the drive (31) comprises a lifting cylinder (33) of which the piston rod (34) is at one end articulated on a centrally mounted pressure beam (36) which is at the other end provided with a transfer member (37) which for its part is adapted for movement against abutment parts (39, 40) on the lifting fork (24) which may be disposed on a cross-member (38) so that the lifting fork (24) can be moved into the transport position or starting position as the case may be.

10. An apparatus according to claim 8 or 9, characterised in that the lifting fork (24) is in the region of the cross-member (38) provided with an abutment part (41) adapted to be moved jointly with the cross-member (38) and which as a function of the movement of the lifting cylinder either releases or imparts a pivoting movement to an abutment part (42) disposed at the end of the tine part (30).

11. An apparatus according to one of claims 8 to 10, characterised in that the lifting fork (24) is supported on the guide carriage (14) via a movable frame having lateral pairs of rollers (46, 37; 48, 49) and which has a drive (54) which can be actuated via reversing pulleys (58, 58') and a chain transmission (57).

12. An apparatus according to claim 11, characterised in that a pair of supporting rollers (55, 56) is associated with whichever pair of rollers (48, 49) happens to be in front in the direction of insertion of the guide carriage (14).

13. An apparatus according to one of claims 5 to 12, characterised in that the loading device (5) is, in the transition area to the pallet (3), provided with at least one indexing pin to establish the horizontal and opposed position.

14. An apparatus for palletising tube portions of paper or like materials which are closed into a tubular form by a longitudinal glued seam and intended for the production of sacks or bags, consisting of a feed device (4) for the tube packages (2), a loading device (5) for receiving said packages and a tiered pallet (3) with a plurality of supporting surfaces (6) which can be moved between an extended receiving position and a storage position in which they are moved towards one another, said supporting surfaces being loaded in a vertical direction one above another in a frame (8), whereby the loading device (5) comprises a guide carriage (14) preferably adapted for vertical movement on the frame (8) and intended for positioning the tube packages (2) which are supported on a comb-like receiving part (15), in a horizontal position opposite the respective supporting surface (6), characterised in that the supporting surfaces (6, 6') of the pallet (3) are connected to one another by lateral carrying and supporting brackets (64) guided for vertical movement in vertical lateral guide slots (63) in the supporting surfaces (6, 6') and individually operable pressing plates (62) are releasably supported by the brackets (64) for the application of pressure to the tube packages (2), in such a way that the respective receiving surfaces (6, 6') are individually subjected to a flat compression of the tube package (2)

15. An apparatus according to claim 14, characterised in that the supporting surfaces (6, 6') are provided with lateral channel-section members (65) of which the respectively upper flange (66) of the profile, via at least two cross-members (67), supports a plurality of supporting rails (61) between which a receiving gap (60) is left while both the guide slots (63) and also the brackets (64) are disposed in a common plane (69) on the base web (68) of the channel-section member (65).

16. An apparatus according to claim 14 or 15, characterised in that the guide slots (63) are respectively extended into the region of the connection between the base web (68) and bracket (64) so that when the pallet (3) is in the storage position the brackets (64) are supported upon one another.

17. An apparatus according to claim 14 or 15, characterised in that whichever is the lower flange (66') of whichever is the upper channel section member (65) can, in the storage position, be supported on whichever is the upper flange (66) of the channel section member (65) disposed beneath it.

18. An apparatus according to one of claims 14 to 17, characterised in that the bracket (64) is constructed as an L-shaped supporting hook (71) of which the free arm (72) supporting the pressing plate (62) has a depth of engagement between the supporting surfaces (6, 6') which corresponds to the length of the flanges (66, 66') of the channel section member (65).

19. An apparatus for palletising tube portions of paper or like materials closed into a tubular form by a longitudinal glued seam and intended for the production of sacks or bags, consisting of a feed device (4) for the tube package (2), a loading device (5) which receives these and a tiered pallet (3) with a plurality of supporting surfaces (6) disposed at a fixed distance in respect of one another and which are to be loaded in a frame (8) while being superposed in a vertical direction, whereby the loading device (5) comprises a guide carriage (14) adapted for vertical movement preferably on the frame (8) and intended for positioning the tube package (2) which is supported on a comb-like receiving part (15) so that the package is in a horizontal portion opposite the respective supporting surface (6), characterised in that the supporting surfaces (6) of the pallet (3') are provided with pressing plates (62') which are adapted for movement independently of one another via a supporting means (75, 75', 75'') and substantially in a vertical direction while being supported in the pallet (3') above the respective supporting surface (6, 6') so that the pressing plate (62') can, for insertion of the tube package (2), be lifted into a release position and, when the tube package (2) has been deposited on the supporting surface (6, 6'), lowered into the pressing position.

20. An apparatus according to claim 19, characterised in that the supporting means (75) is provided with at least one front and one rear pivot arm (78, 79) which are connected at one end to the pressing plate (62') for pivoting movement while being supported at the other end for pivoting movement on the supporting surface (6, 6'), at least one common guide rod (80) extending between the two pivot arms (78, 79).

21. An apparatus according to claim 20, characterised in that the front pivot arm (78) is provided with an additional supporting arm (81) via a joint (82) which is in the form of a scissors-like mechanism.

22. An apparatus according to claim 20 or 21, characterised in that on one of the pivot arms (78) on the scissors-type mechanism there is a supporting pin (83) which can be brought into supporting engagement with a lifting member (77, 77') disposed on the loading device (5), via which supporting pin (83) a pivoting movement (76, 76') which has the effect of being a lifting movement can be imparted to the pivot arms (78, 79, 81) as a function of the particular direction of movement of the load device (5).

23. An apparatus according to one of claims 20 to 22, characterised in that the supporting surfaces (6, 6') are fixed at a constant distance (A) from one another via a frame (84).

24. An apparatus according to claim 19, characterised in that the supporting device (75'') is constituted by two lifting arms (89, 90) comprising at least one lifting member (87, 88) and associated via a guide frame (86) with whichever supporting surface (6, 6') of the pallet (3'') is to be filled.

25. An apparatus according to claim 24, characterised in that the lilting arms (89, 90) comprise pairwisely oppositely disposed pivoting fingers (91, 92 ; 93, 94) adapted to pivot laterally in between the supporting surfaces (6, 6') and with which the pressing plate (62') can be raised into the release position or lowered into the pressing position.

26. An apparatus for palletising tube portions of paper or like materials closed into a tubular form by a longitudinal glued seam and intended for the production of sacks or bags, consisting of a tiered pallet (103) receiving the tube portions as individual tube packages (102) and comprising a plurality of supporting surfaces (106, 106') adapted for movement between a receiving position and a storage position, characterised in that the pallet (103) is constituted by a vertical tower of supporting surfaces (106, 106'; 106'') which are not connected to one another and which can be moved singly by means of a lifting device (175) out of an unoccupied stacking position (A') via the receiving position (B') into the storage position (C'), the supporting surfaces (106, 106'; 106'') being, in the storage position (C'), held in direct reciprocal supporting engagement, each individual supporting surface (106, 106'; 106'') at the same time supporting a pressing plate (162) in automatically releasable fashion and which is associated directly with the immediately underlying supporting surface (106, 106'; 106'') which was previously moved into its storage position (C') so that pressure can be applied to its tube packages (102).

27. An apparatus according to claim 26, characterised in that the supporting surfaces (106, 106') offer a stacking area (107) in the form of a rectangle which, at least in the area of two oppositely disposed lateral edges, is provided with vertical stays (122, 122') which can be brought into supporting engagement.

28. An apparatus according to claim 27, characterised in that the stays (122, 122') are constituted by pairs of supporting feet (143) arranged on a longitudinal bearer (132).

29. An apparatus according to claim 27 or 28, characterised in that the stays (122, 122') are at their respective free ends provided with at least one vertical fixing pin (157) which engages the underlying supporting surface (106, 106').

30. An apparatus according to one of claims 26 to 29, characterised in that the supporting surfaces (106, 106') each have a stacking area (107) formed by a rectangular contour defined by length L and width B.

31. An apparatus according to claim 30, characterised in that the supporting surfaces (106, 106') can in a vertical direction be stacked in a staggered arrangement in respect of one another, being preferably staggered by 90°.

32. An apparatus according to one of claims 26 to 29, characterised in that the stacking area (107') on the supporting surfaces (106'') is square.

33. An apparatus according to one of claims 26 to 32, characterised in that each pressing plate (162) is braced by rests (158) which form a horizontal support and which are situated on pairwisely oppositely disposed inside faces (159) of the vertical stays (122, 122') of the associated supporting surface (106, 106'; 106'') and from which said pressing plate (162) can be lifted off freely in a vertical direction.

34. An apparatus according to claim 33, characterised in that the rests (158) are disposed in the lower end region of the vertical stays (122, 122').

35. An apparatus according to one of claims 26 to 34, characterised in that the supporting surfaces (106, 106';106'') have in the region of at least one of their lateral edges engagement parts for actuating members (153) of the lifting device (175).

## Revendications

1. Procédé de palettisation d'éléments tubulaires fermés par un cordon de colle longitudinal, éléments en papier ou en matières analogues pour la fabrication de sacs ou de poches,
les éléments tubulaires étant fournis sous la forme de paquets d'éléments tubulaires (2) par une machine à fabriquer les éléments tubulaires à une installation de palettisation (2) par un dispositif de chargement (5) qui transfère les paquets d'éléments tubulaires (2), séparément ou par groupes à un plateau (6, 6') respectif d'une palette à étages (3)
et en position de stockage des palettes (3), entre l'opération de palettisation et une opération ultérieure de dépalettisation, ces éléments sont comprimés à plat contre leur plateau respectif (6, 6'),
caractérisé en ce que
- pour effectuer la palettisation, les paquets d'éléments tubulaires (2) sont soulevés dans le dispositif de chargement (5) puis sont mis dans une position à distance au-dessus du plateau (6, 6') pour être introduits dans la palette (3) et lorsqu'on atteint la position prédéterminée, ils sont déposés sur le plateau (6, 6'),
- les paquets d'éléments tubulaires (2) sont alors comprimés en surface avant de charger le plateau (6, 6') suivant, pour que la compression en surface se fasse séparément pour chaque plateau (6, 6').

2. Procédé selon la revendication 1,
caractérisé en ce que
le paquet d'éléments tubulaires respectif est maintenu en compression pendant l'introduction dans la palette jusqu'à la fin de son mouvement de dépôt.

3. Procédé selon les revendications 1 et 2,
caractérisé en ce que
le soulèvement du paquet d'éléments tubulaires de la compression de pincement se font simultanément.

4. Procédé selon l'une des revendications 1 à 3,
caractérisé en ce que
les plateaux de la palette sont chargés successivement avec des paquets d'éléments tubulaires en partant du plateau inférieur jusqu'au plateau supérieur.

5. Installation de palettisation d'éléments tubulaires en papier ou en matières analogues, fermés suivant une forme tubulaire par un cordon de collage longitudinal, pour fabriquer des sacs ou des poches,
comprenant,
un dispositif d'alimentation (4) pour les paquets d'éléments tubulaires (2), un dispositif de chargement (5) qui reçoit ces paquets et une palette à étages (3) avec plusieurs plateaux (6, 6') mobiles entre une position de réception, déployée et une position de stockage, rapprochée, ces plateaux étant chargés dans la direction verticale, les uns au-dessus des autres dans un châssis (8) du dispositif, et le dispositif de chargement (5) comporte un chariot (14) mobile verticalement, de préférence sur le châssis (8) pour positionner le paquet d'éléments tubulaires (2) reposant sur une partie de réception (15) en forme de peigne, dans une position horizontale en regard du plateau (6, 6') respectif,
caractérisée en ce que
le chariot de guidage (14) est muni d'une fourche (24) comportant plusieurs dents (23) servant de support et qui est appuyée entre une position de repos légèrement décalée vers le bas par rapport à la partie de réception (15) et une position de transport relevée verticalement de celle-ci mobile alternativement dans cette position horizontale par rapport à la palette (3) en s'appuyant sur le chariot de transport (14),
et à chaque plateau (6, 6') est associée une plaque de compression (62) actionnée séparément, pour comprimer les paquets d'éléments tubulaires (2) pour avoir une compression en surface des paquets d'éléments tubulaires (2) pour chaque plateau (6, 6') séparément.

6. Installation selon la revendication 5,
caractérisée en ce que
la fourche (24) comporte au moins un organe de retenue (27) qui peut comprimer la face supérieure du paquet d'éléments tubulaires (2).

7. Installation selon la revendication 6,
caractérisée en ce que
l'organe de maintien (27) est réalisé comme une partie (30) en forme de pince, articulée sur le chariot de guidage (14), venant en saillie par rapport à celui-ci vers la palette (3) et qui peut basculer contre la face supérieure du paquet d'éléments tubulaires (2).

8. Installation selon la revendication 7,
caractérisée en ce que
la fourche (24) et la partie en forme de pince (30) peuvent être déplacées par un moyen d'entraînement (31) commun porté par le chariot de guidage (14).

9. Installation selon la revendication 8,
caractérisée en ce que
le moyen d'entraînement (31) comprend un vérin hydraulique (33) dont la tige de piston (34) est articulée par une extrémité à une poutre de compression (36) montée en position médiane et dont l'autre extrémité est munie d'un organe de transmission (37) qui peut être mis contre des pièces d'appui (39, 40) de la fourche (24) qui se trouve chaque fois sur une traverse (38) et mettre ainsi la fourche (24) en position de transport ou en position de repos.

10. Installation selon la revendication 8 ou 9,
caractérisée en ce que
au niveau de la traverse (38) la fourche (24) est munie d'une partie formant appui (41) mobile en commun avec celle-ci et qui libère ou transmet un mouvement de pivotement en fonction du mouvement du vérin de levage d'une partie (42) qui se trouve à une extrémité de la partie en forme de pince (30).

11. Installation selon l'une des revendications 8 à 10,
caractérisée en ce que
la fourche (24) est appuyée sur le chariot de guidage (14) par une paire de galets latéraux (46, 47 ; 48, 49) portés par le châssis, et comportant un moyen d'entraînement (54) actionné par l'intermédiaire de galets de renvoi (58, 58') et un entraînement à chaîne (57).

12. Installation selon la revendication 11,
caractérisée en ce qu'
une paire de galets d'appui (55, 56) est associée chaque fois dans la direction d'introduction du chariot de guidage (14) à la paire de galets avant (48, 49).

13. Installation selon l'une des revendications 5 à 12,
caractérisée en ce que
le dispositif de chargement (5) est muni au moins dans la zone de passage vers la palette (3), d'un goujon d'indexage (44) qui fixe la position horizontale en regard.

14. Installation de palettisation d'éléments fermés constituant une forme tubulaire, avec un cordon de collage longitudinal, en papier ou en une matière servant à la fabrication de sacs ou de poches, comprenant :
- un dispositif d'alimentation (4) pour les paquets d'éléments tubulaires (2),
- un dispositif de chargement (5) recevant ces paquets et une palette à étages (3) comportant plusieurs plateaux (6), mobiles entre une position de réception, déployée et une position de stockage, rapprochée,
ces plateaux étant chargés dans la direction verticale, les uns au-dessus des autres dans un châssis (8),
- le dispositif de chargement (5) ayant un chariot de guidage (14) mobile de préférence verticalement sur le châssis (8) pour positionner le paquet d'éléments tubulaires (2) porte par une partie de réception (15) en forme de peigne, dans une position horizontale en regard du plateau (6) respectif,
caractérisée en ce que
les plateaux (6, 6') de la palette (3) sont reliés par des consoles de support et d'appui (64) guidées de manière mobile en hauteur, dans des fentes de guidage latérales, verticales (63) des plateaux (6, 6'), et,
des plaques de compression (62) actionnées séparément sont soutenues de manière libérable par les consoles (64) pour s'appuyer en compression sur les paquets d'éléments tubulaires (2) de façon à réaliser une compression de surface des paquets d'éléments tubulaires (2) pour chaque plateau (6, 6').

15. Installation selon la revendication 14,
caractérisée en ce que
les plateaux (6, 6') sont munis de poutres (65) latérales, à profil en forme de U, dont la branche supérieure (66) respective soutient par au moins deux traverses (67) plusieurs rails d'appui (61) laissant entre eux un intervalle de réception (60) et la branche de base (68) de la poutre à section en U (65) comporte à la fois les fentes de guidage (63) et les consoles (64), dans un plan d'appui (69) commun.

16. Installation selon les revendications 14 ou 15,
caractérisée en ce que
les fentes de guidage (63) sont prolongées chaque fois jusque dans la zone de liaison de l'entretoise de base (68) et de la console (64) pour qu'en position de stockage de la palette (3), les consoles (64) puissent s'appuyer les unes sur les autres.

17. Installation selon la revendication 14 ou 15,
caractérisée en ce que
la branche inférieure (66') de la poutre supérieure (65) à profil en forme de U, en position de stockage, s'appuie chaque fois sur la branche supérieure (66) de la poutre (65) à section en forme de U qui se trouve en dessous.

18. Installation selon l'une des revendications 14 à 17,
caractérisée en ce que
la console (64) est constituée par un crochet de support (71) en forme de L dont la branche libre (72) portant la plaque de compression (62) est saillie entre les plateaux (6, 6') sur une profondeur de pénétration correspondant à la longueur des branches profilées (66, 66') de la poutre (65) profilée à section en forme de U.

19. Installation de palettisation d'éléments tubulaires fermés par un cordon longitudinal de colle pour constituer des éléments tubulaires en papier ou en matière analogue servant à la fabrication de sacs ou de poches, comprenant :
- un dispositif d'alimentation (4) pour les paquets d'éléments tubulaires (2), un dispositif de chargement (5) recevant ces paquets et une palette à étages (3) avec plusieurs plateaux (6) à distance fixe, et qui sont à charger dans un châssis (8) en position superposée verticalement,
le dispositif de chargement (5) ayant un chariot de guidage (14) mobile verticalement de préférence sur le châssis (8) pour positionner les paquets d'éléments tubulaires (2) portés par une partie de support (15) en forme de peigne dans une position horizontale en regard du plateau (6) respectif,
caractérisée en ce que
les plateaux (6) de la palette (3') sont munis de plaques de compression (62') qui s'appuient au-dessus de chaque plateau (6, 6') respectif dans la palette (3'), par un dispositif de fixation (75, 75', 75''), indépendamment les uns des autres, en étant mobiles essentiellement dans la direction verticale, de façon que la plaque de compression (62') puisse être soulevée en position de libération pour l'introduction des paquets d'éléments tubulaires (2) et après le dépôt des paquets d'éléments tubulaires (2) sur les plateaux (6, 6'), pour s'abaisser en position de compression.

20. Installation selon la revendication 19,
caractérisée en ce que
le dispositif de fixation (75) comporte au moins un bras pivotant (78, 79) avant et arrière, reliés par une extrémité, en pivotement, à la plaque de compression (62') et s'appuyant par l'autre extrémité de manière mobile en pivotement contre le plateau (6, 6'),
et au moins une barre de guidage (80) passe entre les deux bras de pivotement (78, 79).

21. Installation selon la revendication 20,
caractérisée en ce que
le bras pivotant avant (78) est muni d'un bras d'appui (81) complémentaire par une articulation (82) constituant un mécanisme en ciseaux.

22. Installation selon la revendication 20 ou 21,
caractérisée en ce que
l'un des bras pivotants (78) ou le mécanisme en ciseaux comporte un goujon d'appui (83) qui peut être mis en position de prise d'appui avec un élément de levage (77, 77') prévu sur le dispositif de chargement (5), goujon par lequel en fonction de la direction de déplacement respectif du dispositif de chargement (5), les bras de pivotement (78, 79, 81) reçoivent un mouvement de pivotement (76, 76') agissant comme mouvement de levage.

23. Installation selon l'une des revendications 20 à 22,
caractérisée en ce que
les plateaux (6, 6') sont fixés les uns par rapport aux autres à intervalle constant (A) par l'intermédiaire d'un bâti (84).

24. Installation selon la revendication 19,
caractérisée en ce que
le dispositif de fixation (75'') est formé par deux bras de levage (89, 90) associés chaque fois aux plateaux (6, 6') de la palette (3'') à charger par un châssis de guidage (86) et au moins un organe de levage (87, 88).

25. Installation selon la revendication 24,
caractérisée en ce que
les bras de levage (89, 90) comportent des doigts pivotants (91, 92 ; 93, 94) opposés par paires, qui basculent latéralement entre les plateaux (6, 6'), doigts par lesquels la plaque de compression (62') peut être soulevée en position de libération ou être abaissée en position de compression.

26. Installation de palettisation d'éléments tubulaires en papier ou en matière analogue pour la fabrication de sacs ou de poches, éléments tubulaires fermés par un cordon longitudinal de colle pour constituer une forme tubulaire, composée d'au moins une palette à étages (103) recevant les éléments tubulaires sous forme de paquets d'éléments tubulaires (102) séparés, avec un ensemble de plateaux (106, 106') mobiles entre une position de réception et une position de stockage, par déplacement réciproque,
caractérisée en ce que
- la palette (103) est formée par des plateaux (106, 106', 106'') non reliés entre eux et constituant une colonne verticale, ces palettes pouvant être déplacées par un dispositif de levage (175), séparément d'une position d'empilage (A') non occupée, à une position de réception (B') et une position de stockage (C'), les plateaux (106, 106', 106'') étant maintenus en position de stockage (C') en prise d'appui réciproque, directe,
- et chaque plateau (106, 106', 106'') supporte en même temps une plaque de compression (162) se libérant automatiquement, qui est associée directement aux plateaux (106, 106', 106'') directement en dessous, précédemment mis en position de stockage (C') pour comprimer les paquets d'éléments tubulaires (102).

27. Installation selon la revendication 26,
caractérisée en ce que
les plateaux (106, 106') constituent une surface d'empilage (107) rectangulaire comportant au moins au niveau de deux bords latéraux opposés, des organes d'appui (122, 122') verticaux, qui peuvent être mis en prise d'appui.

28. Installation selon la revendication 27,
caractérisée en ce que
les organes d'appui (122, 122') sont constitués par des pieds (143) associés par paires à une poutre longitudinale (132).

29. Installation selon la revendication 27 ou 28,
caractérisée en ce que
les organes d'appui (122, 122') sont munis chaque fois à leur extrémité libre, d'au moins une broche de fixation (157) verticale, venant prendre dans le plateau (106, 106') situé en dessous.

30. Installation selon l'une des revendication 26 à 29,
caractérisée en ce que
les plateaux (106, 106') comportent chaque fois une surface d'empilage (107) formée par un contour rectangulaire de longueur L et de largeur B.

31. Installation selon la revendication 30,
caractérisée en ce que
les plateaux (106, 106') peuvent être empilés dans la direction verticale en étant décalés de préférence de 90°.

32. Installation selon l'une des revendications 26 à 29,
caractérisée en ce que
la surface d'empilage (107') du plateau (106') est carrée.

33. Installation selon l'une des revendications 26 à 32,
caractérisée en ce que
chaque plateau de compression (162) est soutenue par un appui horizontal formé par des appuis (158), sur les côtés intérieurs opposés (159) par paires, des organes d'appui verticaux (122, 122') du plateau correspondant (106, 106', 106'') en pouvant être soulevés librement dans la direction verticale.

34. Installation selon la revendication 33,
caractérisée en ce que
les appuis (158) sont prévus dans la zone d'extrémité inférieure des organes d'appui verticaux (122, 122').

35. Installation selon l'une des revendications 26 à 34,
caractérisée en ce que
les plateaux (106, 106', 106'') comportent dans la zone d'au moins l'un de leurs bords latéraux, des pièces de prise pour des organes d'actionnement (153) du dispositif de levage (175).
